# EUROPEAN PATENT SPECIFICATION

(11) **EP 3 102 032 B1**
(45) Date of publication and mention of the grant of the patent: **10.04.2019**
(21) Application number: 15708601.8
(22) Date of filing: 05.02.2015
(51) Int. Cl.: A01N 25/00, A01C 1/06, C09D 109/08, C09D 139/06, A01N 37/46, A01N 43/653, A01N 47/24, A01N 25/10, A01N 25/04, A01N 25/30

(54) **SEED COATING FORMULATIONS AND THEIR USE FOR YIELD INCREASE**
SAATBESCHICHTUNGSZUSAMMENSETZUNG UND IHRE BENUTZUNG FÜR ERHÖHUNG DES ERNTEVOLUMENS
FORMULATION DE REVÊTEMENT DE GRAINE ET UTILISATION POUR AUGMENTATION DU RENDEMENT

(30) Priority: 05.02.2014 US 201461935895 P
(43) Date of publication of application: 14.12.2016
(73) Proprietor: BASF Corporation, Florham Park, NJ 07932 (US)
(72) Inventor: WIAND, Wade, Madrid, Iowa 50156 (US); HOWIESON, Mark, Ankeny, Iowa 50021 (US); SEEVERS, Kurt, Elkhorn, Nebraska 68022 (US)
(74) Representative: BASF IP Association
(86) International application number: PCT/IB2015/050880
(87) International publication number: WO 2015/118479

(56) References cited:
- WO-A1-2013/166020
- US-A- 5 658 971
- US-A1- 2007 207 927
- US-A1- 2009 143 447
- US-A1- 2009 227 451
- US-B1- 6 230 438
- DEFANG ZENG ET AL: "Physiological Effects of Chitosan Coating on Wheat Growth and Activities of Protective Enzyme with Drought Tolerance", OPEN JOURNAL OF SOIL SCIENCE, vol. 02, no. 03, 1 January 2012 (2012-01-01), pages 282-288, XP055187313, ISSN: 2162-5360, DOI: 10.4236/ojss.2012.23034
- A G TAYLOR ET AL: "Polymer film coatings decrease water uptake and water vapour movement into seeds and reduce imbibitional chilling injury", SEED TREATMENT: CHALLENGES & OPPORTUNITES, vol. 76, 1 January 2001 (2001-01-01), pages 215-220, XP055187314,

## Description

The present invention relates to the seed coating composition comprising:
(a) styrene butadiene latex polymer in an amount of from 25 to 75 % by weight based on the total weight of the composition, and
(b) polyethylene/carnauba wax blend in an amount of from 0.1 to 15 % by weight based on the total weight of the composition, and
(c) ethoxylated castor oil in an amount of from 0.1 to 2.5 % by weight based on the total weight of the composition, and
(d) maleic anhydride-diisobutylene copolymer in an amount of from 0.3 to 3 % by weight based on the total weight of the composition and balance water.

The present invention further relates to the use of said coating composition for increasing the yield of a plant product derived from a seed coated with said composition and to the use of said coating composition for improving the resistance of a seed against abiotic stress.

### Technical background

The application of polymeric coatings to seed has been described in the art in attempts to improve seed flowability and plantability, as well as formulation stability, while improving dust suppression properties. For instance, easy handling of seed material in convenient seed processing equipment like seed hoppers and seed drills require excellent flow properties.

WO 90/11011 A1 suggests pesticide-treated plant seeds that are treated with polydimethylsiloxane lubricant in order to improve bulk flow properties of treated seed. The free flowing pesticide-treated seed optionally includes a film-forming polymer that covers the surface of the seed helping to evenly distribute the pesticide on the seed.

On the other hand, many known seed coating formulations comprising film-forming polymers show dust production that is not desirable during storage and application of seed material.

WO 2013/166020 A1 describes seed coatings having an improved combination of flowability and plantability characteristics as well as low dust-off behaviour.

Nonetheless, known seed coating compositions from the prior art have considered the role of the polymer as merely functional and focused on improving the physical properties (bulk flowing properties, dust binding strength, storage stability, etc.) of seeds without studying the impact seed coatings may have for the biological characteristics of the treated seed.

WO 2013/166020 A1 only studies the dust-off properties, and flow characteristics of the seed product in addition with the general plantability. No biological effect on the seed derived from the seed coating is mentioned or even demonstrated.

In WO 90/11011 A1, relative flow rates of coated seed are measured in combination of dust development while germination trials are only briefly mentioned merely confirming no adverse effect on germination and growth of the seeds.

US 6 230 438 B1 discloses the use of coating selected from the group consisting of styrene-acrylics, styrene-butadienes, styrene-nitrile-butadienes and vinyl acetate-ethylenes for pretect-ing the seed from imbibing water until the ambient temperature reaches the glassification temperature of the polymer.

US 2009/143447 A1 discloses aqueous pesticide formulation comprising 20-50% of at least one pesticidal agent, 1-3% polyvinyl alcohol (PVA), 5-10% plasticizer, 0-5% wax, 0-5% polymer emulsion 0-0,25% LMW surfactant or other wetting agent and 0.1-1,0% additional formulation modifiers and the balance of water and its influence on cold germination.
US 2007/207927 A1 discloses a seed treatment composition containing a) 20% binder, b) 15% wax, c) 15% pigment and d) one or more suspension stabilizers.

US 2009/227451 A1 discloses a seed coating composition containing pesticide, phase change material microcapsules, polyvinylpyrrolidone-vinyl acetate film forming polymere and dye and its use for delaying emergence in cold soil.

In "Physiological Effects of Chitosan Coating on Wheat Growth and Activities of Protective Enzyme with Drough Tolerance", Open Journal of Soil Science, Vol. 02, No. 03, (2012-09), pages 282-288, XP055187313, DOI 10.4236/ojss.2012.23034, A. G. Taylor et al. describe, that chitosan coating significantly improves germination rate of wheat seeds under drought stress.

In "Polymer film coatings decrease water uptake and water vapour movement into seeds and reduce imbibitional chilling injury", Seed Tratement: Challenges & Opportunities, Vol. 76, (2001), pages 215-220, XP055187314 A. G. Taylor et al. describe that hydrophobic polymer coatings are known to reduce imbibitional chilling injury of bean seeds and the results of stress tests show that bean seeds coated with polymer "SB 2000" (based on starch) germinate at 80% whereas non-coated seeds at 32% only.

US 5 658 971 A discloses aqueous coating compositions containing 70% styrene-butadiene copolymer, 5% carnauba wax, 5% of polyethylene wax and 20% sodium alginate aqueous solution.

In contrast to the previous studies merely describing how additional coatings can favorably alter the physical properties of seed material, the present inventors for the first time describe how coating compositions added to seed material improve the biological profile of seed. It is shown by the present invention that the use of the seed coating compositions according to the present invention exert hitherto unknown biological effects at the physical interface between seed and soil in the area of micro rhizosphere.
Accordingly, the present inventors not only surprisingly demonstrate by the present invention the protective biological effects of seed coating compositions on the seed material. Rather, it is additionally shown for the first time that the use of seed coating compositions for protecting the seed, the seedling and the early plant against abiotic stress factors at an early stage of plant development even allows achieving higher yields of final plant product.

The foregoing and other objectives are solved by the subject-matter of the present invention.

In the present invention, the term "coating composition" denotes "seed coating composition".

The specific finding of the present invention is the use of the coating composition as defined in claims - preferably of a coating composition selected from (Q18) to (Q22), and/or a coating composition selected from (R14) to (R19), and/or a coating composition selected from (S18) to (S21) - for increasing the yield of a plant product that is derived from seed treated with said coating composition characterized by the steps of treating the seed with the coating composition and propagating the seed to obtain the plant product.
In another preferred embodiment of the present invention, the above use of a coating composition for increasing the yield of a plant product includes a plant product which is selected from the list of grain, fruit, vegetable, nut, crop, seed, wood, flower, the plant itself and a selected part of this plant.

In another preferred embodiment of the present invention, the compositions as defined in claims - preferably a coating composition selected from (Q18) to (Q22), and/or a coating composition selected from (R14) to (R19), and/or a coating composition selected from (S18) to (S21) - are used for improving resistance of seed against abiotic stress, particularly during seed germination, wherein the use is characterized by the steps of treating the seed with the coating composition and propagating the seed comprising the coating composition in the presence of abiotic stress.

In another preferred embodiment of the present invention, the coating compositions as defined in claims - preferably a coating composition selected from (Q18) to (Q22), and/or a coating composition selected from (R14) to (R19), and/or a coating composition selected from (S18) to (S21) - are used for improving the frost and freeze resistance of seed, particularly during seed germination, wherein the use is characterized by the steps of treating the seed with the coating composition and propagating the seed comprising the coating composition in the presence of low temperature stress and/or in contact with cold water.

In another preferred embodiment of the present invention, the coating compositions as defined in claims - preferably a coating composition selected from (Q18) to (Q22), and/or a coating composition selected from (R14) to (R19), and/or a coating composition selected from (S18) to (S21) - are used for improving the resistance of seed against chilling injury, particularly during seed germination, wherein the use is characterized by the steps of treating the seed with the coating composition and propagating the seed comprising the coating composition in the presence of low temperature stress.
In another preferred embodiment of the present invention, the coating compositions as defined in claims - preferably a coating composition selected from (Q18) to (Q22), and/or a coating composition selected from (R14) to (R19), and/or a coating composition selected from (S18) to (S21) - are used for improving the resistance of seed against imbibition of cold water, particularly during seed germination, wherein the use is characterized by the steps of treating the seed with the coating composition and propagating the seed comprising the coating composition under conditions that lead to the imbibition of the seed with cold water.

In another preferred embodiment of the present invention, the coating compositions as defined in claims are applied in the above uses, wherein the coating composition comprises a film-forming polymer.
In another preferred embodiment of the present invention, coating compositions are applied in the above uses, wherein the film-forming polymer is selected from ethylene vinyl acetate copolymers, styrene butadiene polymers, acrylic-type polymers and combinations thereof.

In another preferred embodiment of the present invention, the coating compositions as defined in claims are used further comprising auxiliaries selected from waxes, carriers, surfactants, emulsifying agents, coloring agents, anti-foam agents, anti-freeze agents, bactericidal agents, thickeners, dispersants, solvents or combinations thereof.

In another preferred embodiment of the present invention, the coating compositions as defined in claims are used further comprising a pesticidal component, wherein the pesticidal component preferably is selected from fungicides, herbicides, insecticides, acaricides, nematicides and combinations thereof.

In yet another preferred embodiment of the present invention, a seed coating composition (Q18) comprising
(a) styrene butadiene latex polymer in an amount of from **25 to 75 wt%, preferably 25 to 55 wt%,** and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) optionally an antifreeze agent in an amount of not more than 15 wt%, and
(f) optionally a thickener in an amount of not more than 5 wt%, and
(g) optionally an anti-foaming agent in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (Q19) comprising
(a) styrene butadiene latex polymer in an amount of from **25 to 75 wt%, preferably 25 to 55 wt%,** and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) an antifreeze agent selected from the group consisting of ethylene glycol, propylene glycol, urea and glycerin (propane-1,2,3-triol) in an amount of from 0.1 to 15 wt%, and
(f) optionally an anti-foaming agent in an amount of not more than 5 wt%, and
(g) optionally a thickener in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (Q20) comprising
(a) styrene butadiene latex polymer in an amount of from **25 to 75 wt%, preferably 25 to 55 wt%,** and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) an antifreeze agent selected from the group consisting of ethylene glycol, propylene glycol, urea and glycerin (propane-1,2,3-triol) in an amount of from 0.1 to 15 wt%, and
(f) dimethylpolysiloxane in an amount of 0.0001 to 5 wt%, and
(g) optionally a thickener in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (Q21) comprising
(a) styrene butadiene latex polymer in an amount of from **25 to 75 wt%, preferably 25 to 55 wt%,** and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) optionally an antifreeze agent in an amount of not more than 15 wt%, and
(f) optionally a thickener in an amount of not more than 5 wt%, and
(g) optionally an anti-foaming agent in an amount of not more than 10 wt%, and
(h) optionally a bactericide in an amount of not more than 5 wt%, and
(i) mica platelets coated with titanium dioxide and/or iron oxide in an amount of 2.5 to 30 wt%, and
(j) water (ad 100 wt%) as a solvent
was found.

In yet another preferred embodiment of the present invention, a seed coating composition (Q22) comprising
(a) a film-forming polymer in an amount of from **25 to 75 wt%, preferably 25 to 55 wt%,** and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) optionally an antifreeze agent in an amount of not more than 15 wt%, and
(f) optionally a thickener in an amount of not more than 5 wt%, and
(g) optionally an anti-foaming agent in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (R14) comprising
(a) styrene butadiene latex polymer in an amount of from **55 to 70** wt%, and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) optionally an antifreeze agent in an amount of not more than 15 wt%, and
(f) optionally a thickener in an amount of not more than 5 wt%, and
(g) optionally an anti-foaming agent in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (R15) comprising
(a) styrene butadiene latex polymer in an amount of from **55 to 70** wt%, and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) an antifreeze agent selected from the group consisting of ethylene glycol, propylene glycol, urea and glycerin (propane-1,2,3-triol) in an amount of from 0.1 to 15 wt%, and
(f) optionally an anti-foaming agent in an amount of not more than 5 wt%, and
(g) optionally a thickener in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (R16) comprising
(a) styrene butadiene latex polymer in an amount of from **55 to 70** wt%, and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) an antifreeze agent selected from the group consisting of ethylene glycol, propylene glycol, urea and glycerin (propane-1,2,3-triol) in an amount of from 0.1 to 15 wt%, and
(f) dimethylpolysiloxane in an amount of 0.0001 to 5 wt%, and
(g) optionally a thickener in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (R17) comprising
(a) styrene butadiene latex polymer in an amount of from 55 to 65 wt%, and
(b) polyethylene/carnauba wax blend in an amount of from 1 to 4 wt%, and
(c) ethoxylated castor oil in an amount of from 0.2 to 1 wt%, and
(d) maleic anhydride-diisobutylene copolymer in an amount of from 0.5 to 1.5 wt%, and
(e) an antifreeze agent selected from the group consisting of ethylene glycol, propylene glycol, urea and glycerin (propane-1,2,3-triol) in an amount of from 0.5 to 3.5 wt%, and
(f) dimethylpolysiloxane in an amount of 0.04 to 0.4 wt%, and
(g) optionally a thickener in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (R18) comprising
(a) styrene butadiene latex polymer in an amount of from **55 to 70 wt%,** and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) optionally an antifreeze agent in an amount of not more than 15 wt%, and
(f) optionally a thickener in an amount of not more than 5 wt%, and
(g) optionally an anti-foaming agent in an amount of not more than 10 wt%, and
(h) optionally a bactericide in an amount of not more than 5 wt%, and
(i) mica platelets coated with titanium dioxide and/or iron oxide in an amount of 2.5 to 30 wt%, and
(j) water (ad 100 wt%) as a solvent
was found.

In yet another preferred embodiment of the present invention, a seed coating composition (R19) comprising
(a) a film-forming polymer in an amount of from **55 to 70 wt%,** and
(b) polyethylene/carnauba wax blend in an amount of from 0.8 to 8 wt%, and
(c) ethoxylated castor oil in an amount of from 0.1 to 2.5 wt%, and
(d) maleic anhydride-diisobutylene copolymer in an amount of from 0.3 to 3 wt%, and
(e) optionally an antifreeze agent in an amount of not more than 15 wt%, and
(f) optionally a thickener in an amount of not more than 5 wt%, and
(g) optionally an anti-foaming agent in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (S18) comprising
(a) polyvinylpyrrolidone / vinyl acetate copolymer in an amount of from 1 to 35 wt%, preferably 20 to 30 wt%, and
(b) polyethylene/carnauba wax blend in an amount of from 0.1 to 15 wt%, and
(c) ethoxylated castor oil in an amount of from 0.1 to 2.5 wt%, and
(d) maleic anhydride-diisobutylene copolymer in an amount of from 0.3 to 3 wt%, and
(e) optionally an antifreeze agent in an amount of not more than 15 wt%, and
(f) optionally a thickener in an amount of not more than 5 wt%, and
(g) optionally an anti-foaming agent in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (S19) comprising
(a) polyvinylpyrrolidone / vinyl acetate copolymer in an amount of from 1 to 35 wt%, preferably 20 to 30 wt%, and
(b) polyethylene/carnauba wax blend in an amount of from 0.1 to 15 wt%, and
(c) ethoxylated castor oil in an amount of from 0.1 to 2.5 wt%, and
(d) maleic anhydride-diisobutylene copolymer in an amount of from 0.3 to 3 wt%, and
(e) an antifreeze agent selected from the group consisting of ethylene glycol, propylene glycol, urea and glycerin (propane-1,2,3-triol) in an amount of from 0.1 to 15 wt%, and
(f) optionally an anti-foaming agent in an amount of not more than 15 wt%, and
(g) optionally a thickener in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (S20) comprising
(a) polyvinylpyrrolidone / vinyl acetate copolymer in an amount of from 1 to 35 wt%, preferably 20 to 30 wt%, and
(b) polyethylene/carnauba wax blend in an amount of from 0.1 to 15 wt%, and
(c) ethoxylated castor oil in an amount of from 0.1 to 2.5 wt%, and
(d) maleic anhydride-diisobutylene copolymer in an amount of from 0.3 to 3 wt%, and
(e) an antifreeze agent selected from the group consisting of ethylene glycol, propylene glycol, urea and glycerin (propane-1,2,3-triol) in an amount of from 0.1 to 15 wt%, and
(f) dimethylpolysiloxane in an amount of 0.0001 to 15 wt%, and
(g) optionally a thickener in an amount of not more than 10 wt%, and
(h) optionally a bactericide in an amount of not more than 5 wt%, and
(i) optionally a pigment in an amount of not more than 30 wt%, and
(j) water (ad 100 wt%) as a solvent
was found.

In yet another preferred embodiment of the present invention, a seed coating composition (S21) comprising
(a) polyvinylpyrrolidone / vinyl acetate copolymer in an amount of from 1 to 35 wt%, preferably 20 to 30 wt%, and
(b) polyethylene/carnauba wax blend in an amount of from 0.1 to 15 wt%, and
(c) ethoxylated castor oil in an amount of from 0.1 to 2.5 wt%, and
(d) maleic anhydride-diisobutylene copolymer in an amount of from 0.3 to 3 wt%, and
(e) optionally an antifreeze agent in an amount of not more than 15 wt%, and
(f) optionally a thickener in an amount of not more than 5 wt%, and
(g) optionally an anti-foaming agent in an amount of not more than 10 wt%, and
(h) optionally a bactericide in an amount of not more than 5 wt%, and
(i) mica platelets coated with titanium dioxide and/or iron oxide in an amount of 2.5 to 30 wt%, and
(j) water (ad 100 wt%) as a solvent
was found.

The coating compositions (Q18) to (Q22), or (R14) to (R19), or (S18) to (S21) may further optionally comprise a pesticidal component.

The term "wt%" denotes "% weight percent based on the total weight of the composition.

In one first embodiment of the present invention, it has been surprisingly found by the present inventors that the seed coating impacts seed, seedling and early plant performance thereby allowing increased yield of plant products by use of seed coating compositions.

One major objective in the agricultural field is to increase the yield of plant product. Maximizing the output of plant product on the level of harvest clearly remains the permanent object for almost every type of agricultural production. In this context, agricultural science and engineering focuses not only on the late stages of cultivation of plants but also seeks to maximize the output of plant product, i.e. the yield of plant product obtainable from a cultivation process, by acting on the early stages of plant cultivation.

The present invention provides a coating composition that is applied to seed at the early stages of plant production allowing for an increase in the final yield of plant product obtainable from such process.

The term "yield" is to be understood as any plant product of economic value that is produced by the plant such as grains, fruits in the proper sense, vegetables, nuts, crops, seeds, wood (e.g. in the case of silviculture plants), flowers (e.g. in the case of gardening plants, ornamentals) or even the number, the weight, or the size of the plant as such, e.g. of trees, bushes, and the like, or even a certain part of the plant, e.g. the leaves, the roots, the trunk or the like. The plant products may in addition be further utilized and/or processed after harvesting.

According to the present invention, "increased yield" of a plant product derived thereof, in particular of an agricultural, silvicultural and/or horticultural plant, preferably agricultural plant, means that the yield of the plant product of the respective plant is increased by a measurable amount relative to the yield of the same product of the plant produced under the same conditions, but without the use of the seed coating composition according to the present invention.

Increased yield can be determined, among other parameters, by the following improved properties of the plant:
Increased plant product weight, increased plant weight, increased plant height, increased biomass such as higher overall fresh weight (FW), higher grain yield, more tillers, larger leaves, increased shoot growth, or increased content of a specific component present in the plant like increased nutrient content, increased protein content, increased oil content, increased vitamin content, increased starch content, increased pigment content.

According to the present invention, the yield of the plant product is increased by at least 2 %, preferable by at least 4 %, more preferred by at least 8 %, even more preferred by at least 16 %).

In further embodiments of the present invention, the coating composition is used for improving the resistance of seed against abiotic stress during the early stages of plant development relating to the seed, the seedling and/or the early plant. One particularly relevant event in early plant development is the stage of seed germination.

The uses according to the present invention are defined by the steps of treating the seed material with the coating composition and propagating the seed comprising the coating composition in the presence of abiotic stress.

The term "abiotic stress" as used in the present invention includes any non-living factor that has the ability to negatively affect the development of a plant in a specific environment.

Abiotic stress factors in the present technical context therefore include extreme temperatures, drought, flood, high winds, unusual pH conditions, high radiation, compaction and any abiotic factors that are caused by natural disasters like tornadoes, hurricans, wildfires, flooding and the like.

Particularly relevant abiotic stress factors according to the present invention are, for example, extreme temperatures being either unusual hot temperature conditions or unusual low temperature conditions, including frost, especially excessive periods of frost, and similar temperatures conditions that lead to the freezing of water either for extended periods of time or only temporary periods. Low temperature stress therefore means exposure of seed, seedling or plant to low temperatures.

Abiotic stress factors, therefore, not only relate to cold temperatures, but also to cold water and the contact of the developing seed, seedling or early plant with cold water, particularly in the context of imbibition of cold water. Abiotic stress factors also may include periods of thawing and freezing, particularly if such freeze-thaw events repeatedly occur.

However, according to the present invention, conditions of frost and freezing include, but are not limited to temperatures below 0°C, but also include low temperatures that are still above 0°C. Low temperatures in the sense of the present invention, therefore, include temperatures in the range of from -80°C to +15°C, preferably -40°C to +10°C, and even more preferably -15°C to +5°C. Accordingly, cold water is understood as frozen and/or liquid water having a temperature in the ranges defined above for low temperatures. In addition, cold water, most preferably, relates to water having a temperature in the range of from 0°C to +15°C or at least below +15°C, preferably below +10°C.

It is well-known in the prior art that such abiotic stresses, particularly low temperature conditions and/or the contact of the early seed or plant with cold water, being either in the frozen state or the liquid cold state or even in alternating states of frozen and liquid cold, e.g. thawed water, negatively impact the early stage of plant development, including seed germination, thereby limiting stand and early plant vigor as well as the proper overall development of the plant in general.

It is demonstrated that the present use of coating compositions for the treatment of seeds leads to the enhanced performance of the plants developing from seed material by protecting the seed, seedling and/or the early plant developing therefrom against such abiotic stress factors, particularly low temperatures and/or contact with cold water.

One main beneficial mechanism of protecting the seed, seedling and/or early plant against abiotic stress by using coating compositions to treat the seed has been identified by the present invention to be linked to the water uptake at the start of the germination process.

The use of the seed coating compositions according to the present invention enhances seedling establishment and lessens the impact of seedling disease by reducing chilling injury and its negative impact to the seed, the seedling and/or the early plant upon contact of the seed, the seedling and/or the early plant with cold water.

It is well-known that the imbibition of cold water into a seed can cause nucleotide changes in young plant roots. The result of this chilling injury is a shortened tap root, as the meristematic tissue in the root tip is killed, (which) often result(s) in a proliferation of secondary roots. Even if these plants generally survive and secondary lateral roots compensate for this earlier loss, the plants are more susceptible to water stress. This effect of chilling injury is for example described in "Chilling injury and nucleotide changes in young cotton plants", James McD Stewart and Gene Dunn, Plant Physiology, 1971, 48, 166-170.

Even worse, if a root lesion occurs at the site of tissue death, a site of disease infection like *Pythium, Fusarium* and/or *Rhizoctonia* can subsequently occur. This basic problem of early plant development starting from the seed has been well documented for cotton which is, as a tropical plant, particularly susceptible to chilling injury caused by the imbibition of cold water.

Nonetheless, low temperatures and/or the interaction of cold water with many plants in its early stages of development, particularly on the level of the seed and the seedling, represent one critical abiotic stress factor that has significant impact for the ultimate yield of plant product.

Consequently, the use of the seed coating compositions according to the present invention is shown to be effective in increasing the resistance of seed, seedling and/or the early plant against the so-called chilling injury.

Chilling injury is understood as damage to a plant that is caused by low temperatures above 0°C, i.e. above the freezing point of water. The damage to the plant includes any possible damage caused by such low temperature including damage to all parts of the plant. The damage by chilling injury is therefore not limited to damage of the root, but also includes damage to the leaves, fruit, flowers and the like.

In this context, the present invention teaches for the first time that the use of coating compositions in the treatment of seed material allows mitigating such early stage, abiotic stress factors, particularly the effects low temperature and/or cold water have on the seed, the seedling and/or even the early plant. The use of the coating compositions for treating seed therefore particularly allows mitigating the effects of cold water imbibition in the seed, seedling and early plant. Such beneficial effects have been identified in particular in dicots, but to slightly lesser content also in monocots.

Therefore, according to one further embodiment of the present invention, the coating composition for the treatment of seed is used for improving the frost and freeze resistance of the seed, particularly during seed germination. Said use is characterized by the steps of treating the seed with the coating composition and propagating the seed comprising the coating composition in the presence of low temperature stress and/or in contact with cold water.

According to one further embodiment of the present invention, the use of the coating composition in the treatment of seed particularly protects the seed, the seedling and the early plant against the imbibition of cold water, particularly during seed germination. Said use is characterized by the steps of treating the seed with the coating composition and propagating the seed comprising the coating composition under abiotic conditions which include the imbibition of cold water.

According to one further embodiment of the present invention, the use of the coating composition in the treatment of seed particularly improves the resistance of seed against chilling injury, particularly during seed germination. Said use is characterized by the steps of treating the seed with the coating composition and propagating the seed comprising the coating composition in the presence of low temperature conditions that lead to chilling injury at the plant derived from the seed.

The coating compositions according to the use of the present invention comprise a film-forming polymer. A film-forming polymer is a polymer which is able to provide a coating on the surface of the seed particle.

The film-forming polymer is styrene butadiene based latex polymer, preferably a styrene butadiene based latex polymer available as DL 233 from Dow.

The film-forming polymer according to the present invention can be prepared according to methods known in the art, for example in analogy to the processes described in EP 1077237 A, EP 0810274 A or US 6790272.

The film-forming polymer is present in the coating composition or coating composition in the form of an aqueous dispersion. As a result of their preparation, the polymers present in form of an aqueous dispersion contain emulsifiers that serve to stabilize the polymer particles in the aqueous dispersion.

The particle size of the film-forming polymer if present in the form of a dispersion given here are weight-average particle sizes, such as can be determined by dynamic light scattering. Methods for this are familiar to a person skilled in the art, for example from H. Wiese in D. Distler, Wässrige Polymerdispersionen [Aqueous polymer dispersions], Wiley-VCH, 1999, chapter 4.2.1, p. 40ff, and the literature cited therein, and also H. Auweter and D. Horn, J. Colloid Interf. Sci., 105 (1985), 399, D. Lilge and D. Horn, Colloid Polym. Sci., 269 (1991), 704, or H. Wiese and D. Horn, J. Chem. Phys., 94 (1991), 6429. The particle size of the polymer is from 5 to 800 nm, preferably 10 to 200 nm.
The coating compositions applied to the seed materials in the various uses according to the present invention can be prepared as different types of compositions. Preferred types of compositions include, but are not limited to, soluble concentrates, emulsions, suspensions, water-dispersible powders and water-soluble powders, and dustable powders.

The coating compositions of the present invention may also include other auxiliaries that are customary in agrochemical compositions. The auxiliaries used depend on the particular application form and the optional pesticide, respectively.

Examples for suitable auxiliaries are solvents, carriers, waxes, surfactants, dispersants, emulsifiers, further solubilizers and adhesion agents, protective colloids, organic and inorganic thickeners, bactericides, anti-freezing agents, anti-foaming agents and if appropriate colorants.

The solvent is water.

Carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

The wax is polyethylene/carnauba wax blend.

The surfactant is ethoxylated castor oil, particularly ethoxylated castor oil with CAS no. 61791-12-6, and the dispersant is maleic anhydride-diisobutylene copolymer.

Examples for thickeners (i. e. compounds that impart a modified flowability to compositions, i. e. high viscosity under static conditions and low viscosity during agitation) are polysaccharides and organic and inorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the composition. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie). A preferred example for a suitable bactericide is water-based 1,2-Benzisothiazolin-3-one (CAS no. 2634-33-5).

Examples for suitable anti-freezing agents are ethylene glycol, propylene glycol, urea and glycerin (propane-1,2,3-triol). A preferred example for anti-freezing agent is propylene glycol and/or glycerin.

Examples for anti-foaming agents are silicone emulsions (such as e. g. Silikon® SRE, Wacker, Germany or Rhodorsil®, Rhodia, France, or such as dimethylpolysiloxane), long chain alcohols, fatty acids, salts of fatty acids, fluoroorganic compounds and mixtures thereof.

Suitable colorants are pigments of low water solubility and water-soluble dyes. Examples to be mentioned are rhodamin B, solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108, acid red 18 = food red 7, food red 1, pearlescent pigment 1025, pearlescent pigment mica/TiO2, mica platelets coated with titanium dioxide and/or iron oxide.

The total amount of auxiliaries depends on the type of composition used. Generally, it varies from 30 to 90% by weight, in particular from 85 to 50% by weight based on the total weight of the composition.

The amount of ethoxylated castor oil surfactant is in the range from 0.1 to 2.5% by weight, particularly preferably from 0.15 to 1.5% by weight, for example from 0.2 to 1 % by weight based on the total weight of the composition.

The amount of maleic anhydride-diisobutylene copolymer dispersant is in the range from 0.3 to 3% by weight, for example from 0.5 to 1.5% by weight based on the total weight of the composition.

In particular, the amount of thickeners varies depending on the composition type. Particularly, it is not more than 10% by weight based on the total weight of the composition. Preferably, it is in the range from 0.001 to 10% by weight, more preferably from 0.004 to 7% by weight, most preferably from 0.01 to 4% by weight, in particular from 0.02 to 2.5% by weight, particularly preferably from 0.04 to 1.5% by weight, for example from 0.08 to 0.8% by weight based on the total weight of the composition.

In particular, the amount of bactericides varies depending on the composition type. Particularly, it is not more than 5% by weight based on the total weight of the composition. Preferably, it is in the range from 0.0001 to 5% by weight, more preferably from 0.0004 to 4% by weight, most preferably from 0.001 to 3% by weight, in particular from 0.004 to 2% by weight, particularly preferably from 0.01 to 1% by weight, for example from 0.04 to 0.4% by weight based on the total weight of the composition.

In particular, the amount of anti-foaming agent varies depending on the composition type. Particularly, it is not more than 15% by weight, more preferably not more than 10% by weight, most preferably not more than 5% by weight based on the total weight of the composition. Preferably, it is in the range from 0.0001 to 15% by weight, more preferably from 0.0001 to 10% by weight, most preferably from 0.0001 to 5% by weight, particularly more preferably from 0.0004 to 4% by weight, particularly most preferably from 0.001 to 3% by weight, in particular from 0.004 to 2% by weight, particularly preferably from 0.01 to 1% by weight, for example from 0.04 to 0.4% by weight based on the total weight of the composition.

In particular, the amount of antifreeze agents varies depending on the composition type. Particularly, it is not more than 15% by weight based on the total weight of the composition. Preferably, it is in the range from 0.1 to 15% by weight, more preferably from 0.2 to 12% by weight, most preferably from 0.5 to 10% by weight, in particular from 0.6 to 7% by weight, particularly preferably from 0.7 to 5% by weight, for example from 0.5 to 3.5% by weight based on the total weight of the composition.
In particular, the amount of wax varies depending on the composition type. Preferably, it is in the range from 0.01 to 20% by weight, more preferably from 0.1 to 15% by weight, most preferably from 0.3 to 10% by weight, in particular from 0.8 to 8% by weight, particularly preferably from 0.9 to 5% by weight, for example from 1 to 4% by weight based on the total weight of the composition.

In particular, the amount of pigments varies depending on the composition type. Particularly, it is not more than 30% by weight based on the total weight of the composition. Preferably, it is in the range from 0.01 to 30% by weight, more preferably from 0.01 to 25% by weight, most preferably from 0.3 to 20% by weight, in particular from 1 to 15% by weight, particularly preferably from 2.5 to 10% by weight, for example from 5 to 8% by weight based on the total weight of the composition. In another embodiment, the amount of pigments is preferably at least 2.5 by weight, preferably from 2.5 to 30% by weight, more preferably from 2.5 to 25% by weight, most preferably from 2.5 to 20% by weight, particularly preferably from 2.5 to 10% by weight based on the total weight of the composition

The amount of carriers and solvents varies depending on the composition type. Usually, it is in the range from 1 to 90 % by weight, in particular from 10 to 60 % by weight and particularly preferably from 15 to 50 % by weight based on the total weight of the composition.

The amount of the remaining composition auxiliaries (viscosity-modifying additives (thickeners), antifoam agents, anti-freeze agents, agents for adjusting the pH, stabilizers, anti-caking agents and biocides (preservatives), colorants, fillers, and plasticizers) varies depending on the composition type. Usually, it is in the range from 0.1 to 60 % by weight, in particular from 0.5 to 40 % by weight and particularly preferably from 1 to 20 % by weight based on the total weight of the composition.

The amount of film-forming polymer, which is a styrene butadiene latex polymer, in the coating composition will not exceed 75 % by weight, preferably 70% by weight of the composition and is preferably from 25 to 75% by weight, and more preferably in the range from 35 to 75% by weight, in particular in the range from 45 to 75% by weight, particularly preferably in the range of from 55 to 75% by weight more particularly preferably in the range from 55 to 70% by weight, for example preferably in the range of 55 to 65% by weight, for example in the range from 57 to 63 % by weight based on the total weight of the composition. Preferably, the ratio by weight of the film-forming polymer and the pesticide is from 1:10 to 2:1, more preferably 1:5 to 1.5:1.

In yet another embodiment, the amount of film-forming polymer, which is a styrene butadiene latex polymer, in the coating composition is preferably in the range of 25 to 35% by weight, more preferably in the range of from 27 to 33% by weight based on the total weight of the composition.

In yet another embodiment, the amount of film-forming polymer, which is a styrene butadiene latex polymer, in the coating composition is preferably in the range of 45 to 55% by weight, more preferably in the range of from 47 to 53% by weight based on the total weight of the composition.

These coating compositions can be applied to plant propagation materials, particularly seeds, diluted or undiluted. The compositions in question give, after two-to-tenfold dilution, pesticide concentrations from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the coating compositions to be used in the present invention are applied on to the plant propagation material by a method such that germination is not induced, e. g. by seed dressing, pelleting, coating and dusting.

In the treatment of plant propagation material (preferably seed), the application rates of the film-forming polymer to be used in the invention are generally in the range of 10 to 500g/100 kg plant propagation material (preferably seed), preferably 20 - 200g/100kg plant propagation material (preferably seed).

The term "plant propagation material" is to be understood to denote all the generative parts of the plant such as, preferably, seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring. Preferably, the term plant seed denotes seeds.

Suitable for the uses according to the present invention is the seed of various cultivated plants that can be classified as either monocots or dicots.
Cultivated plants include but are not limited to, for example, cereals such as wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, oil seed rape / canola, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers, preferably corn, sunflower, cereals such as wheat, rye, barley, triticale, oats or rice, soybean, cotton, oil seed rape / canola more preferably corn, sunflower, soybean, cereals such as wheat, rye, barley, triticale, oats or rice. The term "cultivated plants" is to be broadly understood as including plants which have been modified by breeding, mutagenesis or genetic engineering including but not limiting to agricultural biotech products on the market or in development (cf. http://www.bio.org/speeches/pubs/er/agri_products.asp).

Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as hydroxyphenylpyruvate dioxygenase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/026390, WO 97/41218, WO 98/002526, WO 98/02527, WO 04/106529, WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus,* particularly from *Bacillus thuringiensis*, such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278,
WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the CrylAb toxin), YieldGard® Plus (corn cultivars producing CrylAb and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the CrylAc toxin), Bollgard® I (cotton cultivars producing the CrylAc toxin), Bollgard® II (cotton cultivars producing CrylAc and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The term "at least one pesticidal component" within the meaning of the present invention states that one or more compounds can be selected from the group consisting of fungicides, insecticides, nematicides, herbicide and/or safener or growth regulator, preferably from the group consisting of fungicides, insecticides or nematicides. Also mixtures of pesticides of two or more the aforementioned classes can be used. The skilled artisan is familiar with such pesticides, which can be, for example, found in the Pesticide Manual, 13th Ed. (2003), The British Crop Protection Council, London.

The following list of pesticides is intended to illustrate the possible combinations, but not to impose any limitation to the present invention:
Fungicides, comprising
A) strobilurins azoxystrobin, dimoxystrobin, enestroburin, fluoxastrobin, kresoxim-methyl, metominostrobin, orysastrobin, picoxystrobin, pyraclostrobin, pyribencarb, trifloxystrobin, 2-(2-(6-(3-chloro-2-methyl-phenoxy)-5-fluoro-pyrimidin-4-yloxy)-phenyl)-2-methoxyimino-N-methyl-acetamide, 3-methoxy-2-(2-(N-(4-methoxy-phenyl)-cyclopropane-carboximidoyl-sulfanylmethyl)-phenyl)-acrylic acid methyl ester, methyl (2-chloro-5-[1-(3-methylbenzyloxyimino)ethyl]benzyl)carbamate and 2-(2-(3-(2,6-dichlorophenyl)-1-methyl-allylidene-aminooxymethyl)-phenyl)-2-methoxyimino-N-methyl-acetamide;
B) carboxamides
   - carboxanilides: benalaxyl, benalaxyl-M, benodanil, bixafen, boscalid, carboxin, fenfuram, fenhexamid, flutolanil, furametpyr, isopyrazam, isotianil, kiralaxyl, mepronil, metalaxyl, metalaxyl-M (mefenoxam), ofurace, oxadixyl, oxycarboxin, penthiopyrad, sedaxane, tecloftalam, thifluzamide, tiadinil, 2-amino-4-methyl-thiazole-5-carboxanilide, 2-chloro-N-(1,1,3-trimethyl-indan-4-yl)-nicotinamide, N-(2',4'-difluorobiphenyl-2-yl)-3-difluoromethyl-1-methyl-1H-pyrazole-4-carboxamide, N-(2',4'-dichlorobiphenyl-2-yl)-3-difluoromethyl-1-methyl-1H-pyrazole-4-carboxamide, N-(2',5'-difluorobiphenyl-2-yl)-3-difluoromethyl-1-methyl-1H-pyrazole-4-carboxamide, N-(2',5'-dichlorobiphenyl-2-yl)-3-difluoromethyl-1-methyl-1H-pyrazole-4-carboxamide, N-(3',5'-difluorobiphenyl-2-yl)-3-difluoromethyl-1-methyl-1H-pyrazole-4-carboxamide, N-(3'-fluorobiphenyl-2-yl)-3-difluoromethyl-1-methyl-1H-pyrazole-4-carboxamide, N-(3'-chlorobiphenyl-2-yl)-3-difluoromethyl-1-methyl-1H-pyrazole-4-carboxamide, N-(2'-fluorobiphenyl-2-yl)-3-difluoromethyl-1-methyl-1H-pyrazole-4-carboxamide, N-(2'-chlorobiphenyl-2-yl)-3-difluoromethyl-1-methyl-1H-pyrazole-4-carboxamide, N-(3',5'-dichlorobiphenyl-2-yl)-3-difluoromethyl-1-methyl-1H-pyrazole-4-carboxamide, N-(3',4',5'-trifluorobiphenyl-2-yl)-3-difluoromethyl-1-methyl-1H-pyrazole-4-carboxamide, N-(2',4',5'-trifluorobiphenyl-2-yl)-3-difluoromethyl-1-methyl-1H-pyrazole-4-carboxamide, N-[2-(1,1,2,3,3,3-hexafluoro-propoxy)-phenyl]-3-difluoromethyl-1-methyl-1H-pyrazole-4-carboxamide, N-[2-(1,1,2,2-tetrafluoroethoxy)-phenyl]-3-difluoromethyl-1-methyl-1H-pyrazole-4-carboxamide, N-(4'-trifluoromethylthiobiphenyl-2-yl)-3-difluoromethyl-1-methyl-1H-pyrazole-4-carboxamide, N-(2-(1,3-dimethyl-butyl)-phenyl)-1,3-dimethyl-5-fluoro-1H-pyrazole-4-carboxamide, N-(2-(1,3,3-trimethyl-butyl)-phenyl)-1,3-dimethyl-5-fluoro-1H-pyrazole-4-carboxamide, N-(4'-chloro-3',5'-difluoro-biphenyl-2-yl)-3-difluoromethyl-1-methyl-1H-pyrazole-4-carboxamide, N-(4'-chloro-3',5'-difluoro-biphenyl-2-yl)-3-trifluoromethyl-1-methyl-1H-pyrazole-4-carboxamide, N-(3',4'-dichloro-5'-fluoro-biphenyl-2-yl)-3-trifluoromethyl-1-methyl-1H-pyrazole-4-carboxamide, N-(3',5'-difluoro-4'-methyl-biphenyl-2-yl)-3-difluoromethyl-1-methyl-1H-pyrazole-4-carboxamide, N-(3',5'-difluoro-4'-methyl-biphenyl-2-yl)-3-trifluoromethyl-1-methyl-1H-pyrazole-4-carboxamide, N-[1,2,3,4-tetrahydro-9-(1-methylethyl)-1,4-methanonaphthalen-5-yl]-3-(difluoromethyl)-1-methyl-1H-pyrazole-4-carboxamide;
   - carboxylic morpholides: dimethomorph, flumorph, pyrimorph;
   - benzoic acid amides: flumetover, fluopicolide, fluopyram, zoxamide, N-(3-Ethyl-3,5,5-trimethyl-cyclohexyl)-3-formylamino-2-hydroxy-benzamide;
   - other carboxamides: carpropamid, dicyclomet, mandiproamid, oxytetracyclin, silthiofarm and N-(6-methoxy-pyridin-3-yl) cyclopropanecarboxylic acid amide;
C) azoles
   - triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-(4-chloro-phenyl)-2-([1,2,4]triazol-1-yl)-cycloheptanol;
   - imidazoles: cyazofamid, imazalil, pefurazoate, prochloraz, triflumizol;
   - benzimidazoles: benomyl, carbendazim, fuberidazole, thiabendazole;
   - others: ethaboxam, etridiazole, hymexazole and 2-(4-chloro-phenyl)-N-[4-(3,4-dimethoxyphenyl)-isoxazol-5-yl]-2-prop-2-ynyloxy-acetamide;
D) heterocyclic compounds
   - pyridines: fluazinam, pyrifenox, 3-[5-(4-chloro-phenyl)-2,3-dimethyl-isoxazolidin-3-yl]-pyridine, 3-[5-(4-methyl-phenyl)-2,3-dimethyl-isoxazolidin-3-yl]-pyridine, 2,3,5,6-tetra-chloro-4-methanesulfonyl-pyridine, 3,4,5-trichloropyridine-2,6-di-carbonitrile, N-(1-(5-bromo-3-chloro-pyridin-2-yl)-ethyl)-2,4-dichloronicotinamide, N-[(5-bromo-3-chloro-pyridin-2-yl)-methyl]-2,4-dichloro-nicotinamide;
   - pyrimidines: bupirimate, cyprodinil, diflumetorim, fenarimol, ferimzone, mepanipyrim, nitrapyrin, nuarimol, pyrimethanil;
   - piperazines: triforine;
   - pyrroles: fenpiclonil, fludioxonil;
   - morpholines: aldimorph, dodemorph, dodemorph-acetate, fenpropimorph, tridemorph;
   - piperidines: fenpropidin;
   - dicarboximides: fluoroimid, iprodione, procymidone, vinclozolin;
   - non-aromatic 5-membered heterocycles: famoxadone, fenamidone, flutianil, octhilinone, probenazole, 5-amino-2-isopropyl-3-oxo-4-ortho-tolyl-2,3-dihydro-pyrazole-1-carbothioic acid S-allyl ester;
   - others: acibenzolar-S-methyl, amisulbrom, anilazin, blasticidin-S, captafol, captan, chinomethionat, dazomet, debacarb, diclomezine, difenzoquat, difenzoquat-methylsulfate, fenoxanil, Folpet, oxolinic acid, piperalin, proquinazid, pyroquilon, quinoxyfen, triazoxide, tricyclazole, 2-butoxy-6-iodo-3-propylchromen-4-one, 5-chloro-1-(4,6-dimethoxy-pyrimidin-2-yl)-2-methyl-1H-benzoimidazole, 5-chloro-7-(4-methylpiperidin-1-yl)-6-(2,4,6-trifluorophenyl)-[1,2,4]triazolo[1,5-a]pyrimidine, 6-(3,4-dichloro-phenyl)-5-methyl-[1,2,4]triazolo[1,5-a]pyrimidine-7-ylamine, 6-(4-tert-butylphenyl)-5-methyl-[1,2,4]triazolo[1,5-a]pyrimidine-7-ylamine, 5-methyl-6-(3,5,5-trimethyl-hexyl)-[1,2,4]triazolo[1,5-a]pyrimidine-7-ylamine, 5-methyl-6-octyl-[1,2,4]triazolo[1,5-a]pyrimidine-7-ylamine, 6-methyl-5-octyl-[1,2,4]triazolo[1,5-a]pyrimidine-7-ylamine, 6-ethyl-5-octyl-[1,2,4]triazolo[1,5-a]pyrimidine-7-ylamine, 5-ethyl-6-octyl-[1,2,4]triazolo[1,5-a]pyrimidine-7-ylamine, 5-ethyl-6-(3,5,5-trimethyl-hexyl)-[1,2,4]triazolo[1,5-a]pyrimidine-7-ylamine, 6-octyl-5-propyl-[1,2,4]triazolo[1,5-a]pyrimidine-7-ylamine, 5-methoxymethyl-6-octyl-[1,2,4]triazolo[1,5-a]pyrimidine-7-ylamine, 6-octyl-5-trifluoromethyl-[1,2,4]triazolo[1,5-a]pyrimidine-7-ylamine and 5-trifluoromethyl-6-(3,5,5-trimethyl-hexyl)-[1,2,4]triazolo[1,5-a]pyrimidine-7-ylamine;
E) carbamates
   - thio- and dithiocarbamates: ferbam, mancozeb, maneb, metam, methasulphocarb, metiram, propineb, thiram, zineb, ziram;
   - carbamates: benthiavalicarb, diethofencarb, iprovalicarb, propamocarb, propamocarb hydrochlorid, valiphenal and N-(1-(1-(4-cyano-phenyl)ethanesulfonyl)-but-2-yl) carbamic acid-(4-fluorophenyl) ester;
F) other active substances
   - guanidines: guanidine, dodine, dodine free base, guazatine, guazatine-acetate, iminoctadine, iminoctadine-triacetate, iminoctadine-tris(albesilate);
   - antibiotics: kasugamycin, kasugamycin hydrochloride-hydrate, streptomycin, polyoxine, validamycin A;
   - nitrophenyl derivates: binapacryl, dinobuton, dinocap, nitrthal-isopropyl, tecnazen, organometal compounds: fentin salts, such as fentin-acetate, fentin chloride or fentin hydroxide;
   - sulfur-containing heterocyclyl compounds: dithianon, isoprothiolane;
   - organophosphorus compounds: edifenphos, fosetyl, fosetyl-aluminum, iprobenfos, phosphorous acid and its salts, pyrazophos, tolclofos-methyl;
   - organochlorine compounds: chlorothalonil, dichlofluanid, dichlorophen, flusulfamide, hexachlorobenzene, pencycuron, pentachlorphenole and its salts, phthalide, quintozene, thiophanate-methyl, tolylfluanid, N-(4-chloro-2-nitro-phenyl)-N-ethyl-4-methyl-benzenesulfonamide;
   - inorganic active substances: Bordeaux mixture, copper acetate, copper hydroxide, copper oxychloride, basic copper sulfate, sulfur;
   - others: biphenyl, bronopol, cyflufenamid, cymoxanil, diphenylamin, metrafenone, mildiomycin, oxin-copper, prohexadione-calcium, spiroxamine, tolylfluanid, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, 2-{1-[2-(5-methyl-3-trifluoromethyl-pyrazole-1-yl)-acetyl]-piperidin-4-yl}-thiazole-4-carboxylic acid methyl-(1,2,3,4-tetrahydro-naphthalen-1-yl)-amide, 2-{1-[2-(5-methyl-3-trifluoromethyl-pyrazole-1-yl)-acetyl]-piperidin-4-yl}-thiazole-4-carboxylic acid methyl-(R)-1,2,3,4-tetrahydro-naphthalen-1-yl-amide, acetic acid 6-tert.-butyl-8-fluoro-2,3-dimethyl-quinolin-4-yl ester and methoxy-acetic acid 6-tert-butyl-8-fluoro-2,3-dimethyl-quinolin-4-yl ester.
G) growth regulators
   abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid, maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid, trinexapac-ethyl and uniconazole;
H) herbicides comprising
   - acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
   - amino acid derivatives: bilanafos, glyphosate, glufosinate, sulfosate;
   - aryloxyphenoxypropionates: clodinafop, cyhalofop-butyl, fenoxaprop, fluazifop, haloxyfop, metamifop, propaquizafop, quizalofop, quizalofop-P-tefuryl;
   - Bipyridyls: diquat, paraquat;
   - (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
   - cyclohexanediones: butroxydim, clethodim, cycloxydim, profoxydim, sethoxydim, tepraloxydim, tralkoxydim;
   - dinitroanilines: benfluralin, ethalfluralin, oryzalin, pendimethalin, prodiamine, trifluralin;
   - diphenyl ethers: acifluorfen, aclonifen, bifenox, diclofop, ethoxyfen, fomesafen, lactofen, oxyfluorfen;
   - hydroxybenzonitriles: bomoxynil, dichlobenil, ioxynil;
   - imidazolinones: imazamethabenz, imazamox, imazapic, imazapyr, imazaquin, imazethapyr;
   - phenoxy acetic acids: clomeprop, 2,4-dichlorophenoxyacetic acid (2,4-D), 2,4-DB, dichlorprop, MCPA, MCPA-thioethyl, MCPB, Mecoprop;
   - pyrazines: chloridazon, flufenpyr-ethyl, fluthiacet, norflurazon, pyridate;
   - pyridines: aminopyralid, clopyralid, diflufenican, dithiopyr, fluridone, fluroxypyr, picloram, picolinafen, thiazopyr;
   - sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metsulfuronmethyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
   - triazines: ametryn, atrazine, cyanazine, dimethametryn, ethiozin, hexazinone, metamitron, metribuzin, prometryn, simazine, terbuthylazine, terbutryn, triaziflam;
   - ureas: chlorotoluron, daimuron, diuron, fluometuron, isoproturon, linuron, methabenzthiazuron, tebuthiuron;
   - other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
   - others: amicarbazone, aminotriazole, anilofos, beflubutamid, benazolin, bencarbazone,benfluresate, benzofenap, bentazone, benzobicyclon, bromacil, bromobutide, butafenacil, butamifos, cafenstrole, carfentrazone, cinidon-ethlyl, chlorthal, cinmethylin, clomazone, cumyluron, cyprosulfamide, dicamba, difenzoquat, diflufenzopyr, *Drechslera monoceras,* endothal, ethofumesate, etobenzanid, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufenethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, 4-hydroxy-3-[2-(2-methoxy-ethoxymethyl)-6-trifluoromethyl-pyridine-3-carbonyl]-bicyclo[3.2.1]oct-3-en-2-one, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.
I) Insecticides or acaricides or ematicides selected from
   M.1. Organo(thio)phosphates: acephate, azamethiphos, azinphos-ethyl, azinphos-methyl, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethyl-vinphos, disulfoton, EPN, ethion, ethoprophos, famphur, fenamiphos, fenitrothion, fenthion, flupyrazophos, fosthiazate, heptenophos, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
   M.2. Carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, triazamate;
   M.3. Pyrethroids: acrinathrin, allethrin, d-cis-trans allethrin, d-trans allethrin, bifenthrin, bioallethrin, bioallethrin S-cylclopentenyl, bioresmethrin, cycloprothrin, cyfluthrin, beta-cyfluthrin, cyhalothrin, lambda-cyhalothrin, gamma-cyhalothrin, cypermethrin, alpha-cypermethrin, betacypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, imiprothrin, metofluthrin, permethrin, phenothrin, prallethrin, profluthrin, pyrethrin (pyrethrum), resmethrin, silafluofen, tefluthrin, tetramethrin, tralomethrin, transfluthrin;
   M.4. Juvenile hormone mimics: hydroprene, kinoprene, methoprene, fenoxycarb, pyriproxyfen;
   M.5. Nicotinic receptor agonists/antagonists compounds: acetamiprid, bensultap, cartap hydrochloride, clothianidin, dinotefuran, imidacloprid, thiamethoxam, nitenpyram, nicotine, spinosad (allosteric agonist), spinetoram (allosteric agonist), thiacloprid, thiocyclam, thiosultap-sodium and AKD1022;
   M.6. GABA gated chloride channel antagonist compounds: chlordane, endosulfan, gamma-HCH (lindane); ethiprole, fipronil, pyrafluprole, pyriprole;
   M.7. Chloride channel activators: abamectin, emamectin benzoate, milbemectin, lepimectin;
   M.8. METI I compounds: fenazaquin, fenpyroximate, pyrimidifen, pyridaben, tebufenpyrad, tolfenpyrad, flufenerim, rotenone;
   M.9. METI II and III compounds: acequinocyl, fluacyprim, hydramethylnon;
   M.10. Uncouplers of oxidative phosphorylation: chlorfenapyr, DNOC;
   M.11. Inhibitors of oxidative phosphorylation: azocyclotin, cyhexatin, diafenthiuron, fenbutatin oxide, propargite, tetradifon;
   M.12. Moulting disruptors: cyromazine, chromafenozide, halofenozide, methoxyfenozide, tebufenozide;
   M.13. Synergists: piperonyl butoxide, tribufos;
   M.14. Sodium channel blocker compounds: indoxacarb, metaflumizone;
   M.15. Fumigants: methyl bromide, chloropicrin sulfuryl fluoride;
   M.16. Selective feeding blockers: crylotie, pymetrozine, flonicamid;
   M.17. Mite growth inhibitors: clofentezine, hexythiazox, etoxazole;
   M.18. Chitin synthesis inhibitors: buprofezin, bistrifluron, chlorfluazuron, diflubenzuron, flucycloxuron, flufenoxuron, hexaflumuron, lufenuron, novaluron, noviflumuron, teflubenzuron, triflumuron;
   M.19. Lipid biosynthesis inhibitors: spirodiclofen, spiromesifen, spirotetramat;
   M.20. Octapaminergic agonsits: amitraz;
   M.21. Ryanodine receptor modulators: flubendiamide; (R)-, (S)-3-Chlor-N1-{2-methyl-4-[1,2,2,2 -tetrafluor-1-(trifluormethyl)ethyl]phenyl}-N2-(1-methyl-2-methylsulfonylethyl)phthalamid (M21.1);
   M.22. Various: aluminium phosphide, amidoflumet, benclothiaz, benzoximate, bifenazate, borax, bromopropylate, cyanide, cyenopyrafen, cyflumetofen, chinomethionate, dicofol, fluoroacetate, phosphine, pyridalyl, pyrifluquinazon, sulfur, organic sulfur compounds, tartar emetic, sulfoxaflor, 4-But-2-ynyloxy-6-(3,5-dimethyl-piperidin-1-yl)-2-fluoro-pyrimidine (M22.1), 3-Benzoylamino-N-[2,6-dimethyl-4-(1,2,2,2-tetrafluoro-1-trifluoromethyl-ethyl)-phenyl]-2-fluorobenzamide (M22.2), 4-[5-(3,5-Dichloro-phenyl)-5-trifluoromethyl-4,5-dihydro-isoxazol-3-yl]-2-methyl-N-pyridin-2-ylmethyl-benzamide (M22.3),4-[5-(3,5-Dichloro-phenyl)-5-trifluoromethyl-4,5-dihydro-isoxazol-3-yl]-2-methyl-N-(2,2,2-trifluoro-ethyl)-benzamide (M22.4),4-[5-(3,5-Dichlorophenyl)-5-trifluoromethyl-4,5-dihydro-isoxazol-3-yl]-2-methyl-N-thiazol-2-ylmethyl-benzamide (M22.5), 4-[5-(3,5-Dichloro-phenyl)-5-trifluoromethyl-4,5-dihydro-isoxazol-3-yl]-2-methyl-N-(tetrahydro-furan-2-ylmethyl)-benzamide (M22.6), 4-{[(6-Bromopyrid-3-yl)methyl](2-fluoroethyl)amino}furan-2(5H)-on (M22.7), 4-{[(6-Fluoropyrid-3-yl)methyl](2,2-difluoroethyl)amino}furan-2(5H)-on(M22.8), 4-f[(2-Chloro1,3-thiazolo-5-yl)methyl](2-fluoroethyl)amino}furan-2(5H)-on (M22.9), 4-{[(6-Chloropyrid-3-yl)methyl](2-fluoroethyl)amino}furan-2(5H)-on (M22.10), 4-{[(6-Chloropyrid-3-yl)methyl](2,2-difluoroethyl)amino}furan-2(5H)-on(M22.11), 4-{[(6-Chloro-5-fluoropyrid-3-yl)methyl](methyl)amino}furan-2(5H)-on(M22.12),4-{[(5,6-Dichloropyrid-3-yl)methyl](2-fluoroethyl)amino}furan-2(5H)-on(M22.13), 4-{[(6-Chloro-5-fluoropyrid-3-yl)methyl](cyclopropyl)amino}furan-2(5H)-on(M22.14), 4-{[(6-Chloropyrid-3-yl)methyl](cyclopropyl)amino}furan-2(5H)-on(M22.15), 4-{[(6-Chloropyrid-3-yl)methyl](methyl)amino}furan-2(5H)-on(M22.16), Cyclopropaneacetic acid, 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl] ester(M22.17), 8-(2-Cyclopropylmethoxy-4-methyl-phenoxy)-3-(6-methyl-pyridazin-3-yl)-3-aza-bicyclo[3.2.1]octane(M22.18),
   M.23. N-R'-2,2-dihalo-1-R"cyclo-propanecarboxamide-2-(2,6-dichloro-α,α,α-trifluoro-p-tolyl)hydrazone or N-R'-2,2-di(R"')propionamide-2-(2,6-dichloro-α,α,α-trifluoro-p-tolyl)-hydrazone, wherein R' is methyl or ethyl, halo is chloro or bromo, R" is hydrogen or methyl and R'" is methyl or ethyl;
   M.24. Anthranilamides: chloranthraniliprole,cyantraniliprole, 5-Bromo-2-(3-chloro-pyridin-2-yl)-2H-pyrazole-3-carboxylic acid [4-cyano-2-(1-cyclopropyl-ethylcarbamoyl)-6-methyl-phenyl]-amide (M24.1),5-Bromo-2-(3-chloro-pyridin-2-yl)-2H-pyrazole-3-carboxylic acid [2-chloro-4-cyano-6-(1-cyclopropyl-ethylcarbamoyl)-phenyl]-amide (M24.2), 5-Bromo-2-(3-chloro-pyridin-2-yl)-2H-pyrazole-3-carboxylic acid [2-bromo-4-cyano-6-(1-cyclopropyl-ethylcarbamoyl)-phenyl]-amide(M24.3), 5-Bromo-2-(3-chloro-pyridin-2-yl)-2H-pyrazole-3-carboxylic acid [2-bromo-4-chloro-6-(1-cyclopropyl-ethylcarbamoyl)-phenyl]-amide(M24.4), 5-Bromo-2-(3-chloro-pyridin-2-yl)-2H-pyrazole-3-carboxylic acid [2,4-dichloro-6-(1-cyclopropyl-ethylcarbamoyl)-phenyl]-amide (M24.5), 5-Bromo-2-(3-chloro-pyridin-2-yl)-2H-pyrazole-3-carboxylic acid [4-chloro-2-(1-cyclopropyl-ethylcarbamoyl)-6-methyl-phenyl]-amide (M24.6),
   M.25. Malononitrile compounds: CF₂HCF₂CF₂CF₂CH₂C(CN)₂CH₂CH₂CF₃, (2-(2,2,3,3,4,4,5,5-octafluoropentyl)-2-(3,3,3-trifluoro-propyl)malononitrile), CF₂HCF₂CF₂CF₂CH₂C(CN)₂CH₂CH₂CF₂CF₃(2-(2,2,3,3,4,4,5,5-octafluoropentyl)-2-(3,3,4,4,4-pentafluorobutyl)-malonodinitrile);
   M.26. Microbial disruptors: Bacillus thuringiensis subsp. Israelensi, Bacillus sphaericus, Bacillus thuringiensis subsp. Aizawai, Bacillus thuringiensis subsp. Kurstaki, Bacillus thuringiensis subsp. Tenebrionis;

Thioamides of formula M6.1 and their preparation have been described in WO 98/28279. Lepimectin is known from Agro Project, PJB Publications Ltd, November 2004. Benclothiaz and its preparation have been described in EP-A1 454621. Methidathion and Paraoxon and their preparation have been described in Farm Chemicals Handbook, Volume 88, Meister Publishing Company, 2001. Metaflumizone and its preparation have been described in EP-A1 462 456. Flupyrazofos has been described in Pesticide Science 54, 1988, p.237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. AKD 1022 and its preparation have been described in US 6300348. Chloranthraniliprole has been described in WO 01/70671, WO 03/015519 and WO 05/118552. The anthranilamides M 24.1 to M 24.6 have been described in WO 2008/72743 and WO 200872783. The phthalamide M 21.1 is known from WO 2007/101540. Cyflumetofen and its preparation have been described in WO 04/080180. The aminoquinazolinone compound pyrifluquinazon has been described in EP A 109 7932. The alkynylether compound M22.1 is described e.g. in JP 2006131529. Organic sulfur compounds have been described in WO 2007060839. The carboxamide compound M 22.2 is known from WO 2007/83394. The oxazoline compounds M 22.3 to M 22.6 have been described in WO 2007/074789. The furanon compounds M 22.7 to M 22.16 have been described eg. in WO 2007/115644. The pyripyropene derivative M 22.17 has been described in WO 2008/66153 and WO 2008/108491. The pyridazin compound M 22.18 has been described in JP 2008/115155. The malononitrile compounds have been described in WO 02/089579, WO 02/090320, WO 02/090321, WO 04/006677, WO 05/068423, WO 05/068432 and WO 05/063694.

If herbicide is used for seed treatment, the herbicide is preferably applied on the respective herbicide tolerant plant. Examples of suitable transgenic plants resistant to herbicides are mentioned above.

To prevent damage by the herbicide by seed treatment, the respective herbicide can be combined with a suitable safener to prevent phytotoxic damage by the herbicide.

Suitable safeners can be selected from the following listing: 8-quinolinyl-oxy acetic acids (such as cloquintocet-mexyl), 1-phenyl-5-haloalkyl-1,2,4-triazole-3-carboxylic acids (such as fenchlorazole and fenchlorazole-ethyl), 1-phenyl-5-alkyl-2-pyrazoline-3,5-dicarboxylic acid (such as mefenpyr and mefenpyr-diethyl), 4,5-dihydro-5,5-diaryl-1,2-oxazole-3-carboxylic acids (such as isoxadifen and isoxadifen-ethyl), dichloroacetamides (such as dichlormid, furilazole, dicyclonon and benoxacor), alpha-(alkoxyimino)-benzeneacetonitrile (such as cyometrinil and oxabetrinil), acetophenone oximes (such as fluxofenim), 4,6-dihalogeno-2-phenylpyrimidines (such as fenclorim), N-((4-alkylcarbamoyl)-phenylsulfonyl)-2-benzamides (such as cyprosulfamide), 1,8-naphthalic anhydride, 2-halo-4-haloalkyl-1,3-thiazole-5-carboxylic acids and 2-halo-4-haloalkyl-1,3-thiazole-5-carboxylates (such as flurazole), N-alkyl-O-phenyl carbamates (such as mephenate), N-alkyl-N'-aryl ureas (such as daimuron and cumyluron), S-alkyl-N-alkyl-thiocarbamates (such as dimepiperate) and phosphorothioates (such as dietholate) as well as their agriculturally useful salts; as well as their agriculturally useful derivaties, such as amides, esters and thioesters in case of present carboxylic acid functions.

Alternatively, the seed material can be coated beforehand with an active substance-free polymer film. Suitable methods are known to the person skilled in the art. For example, WO 04/049778 describes a method in which, in a first step, the seed material is coated with an active substance-free polymer film before applying a dressing composition. In addition, potential phytotoxic effects may be avoided using encapsulation technologies for the herbicide in question.

Preferred herbicides, which are used on the respective resistant plant propagation materials are amino acid derivatives such as bilanafos, glyphosate, glufosinate, sulfosate, more preferably glyphosatae and glufosinate, most preferably glyphosate.

Preferred insecticides are sulfoxaflor, acetamiprid, alpha-cypermethrin, clothianidin, fipronil, imidacloprid, spinosad, tefluthrin, thiamethoxam, metaflumizon, beta-cefluthrin, chlorantraniliprole (rynaxypyr), cyantraniliprole (cyazapyr), sulfoxaflor and flubendiamide, more preferably acetamiprid, clothianidin, imidacloprid, thiamethoxam, spinosad, metaflumizone, , fipronil, chlorantraniliprole (rynaxypyr) and cyantraniliprole (cyazapyr).

Preferred fungicides are selected from metalaxyl, mefenoxam, pyrimethanil, epoxiconazole, fluquiconazole, flutriafol, hymexazole, imazalil, metconazole, prochloraz, tebuconazole, triticonazole, iprodione, metiram, thiram, boscalid, carbendazim, silthiofam, fludioxonil, azoxystrobin, , kresoxim-methyl, orysastrobin, pyraclostrobin trifloxystrobin, thiophanate methyl, ipconazole, prothiconazole, difenoconazole, triadimenol, triazoxide, fluoxastrobin, N-(3',4',5'-trifluorobiphenyl-2-yl)- 3-difluoromethyl-1-methyl-1H-pyrazole-4-carboxamide, N-[2-(4'-trifluoromethylthio)-biphenyl]-3-difluoromethyl-1-methyl-1H-pyrazole-4-carboxamide, bixafen, N-[2-(1,3-dimethylbutyl)-phenyl]-1,3-dimethyl-5-fluoro-1H-pyrazole-4-carboxamide, sedaxane, isopyrazam and penthiopyrad, more preferably metalaxyl, mefenoxam, epoxiconazole, fluquiconazole, prochloraz, triticonazole, iprodion, thiram, tebuconazole, boscalid, carbendazim, silthiofam, fludioxonil, azoxystrobin, orysastrobin, pyraclostrobin, trifloxystrobin, thiophante methyl, ipconazole, prothiocaonazole, difenoconazole, N-(3',4',5'-trifluorobiphenyl-2-yl)-3-difluoromethyl-1-methyl-1H-pyrazole-4-carboxamide, N-[2-(1,3-dimethylbutyl)-phenyl]-1,3-dimethyl-5-fluoro-1H-pyrazole-4-carboxamide, sedaxane and penthiopyrad.

The amount of pesticide to be used in the coating composition used for treating seed material depends on the composition type. Principally, the agrochemical compositions generally comprise between 0.01 and 95%, preferably between 0.1 and 90%, most preferably between 0.5 and 90%, by weight of the pesticide.

For example, in the liquid compositions (as set forth above), the amount of the at least one pesticide is usually in the range from 2 to 70% by weight.

In the solid compositions (as set forth above), the amount of the at least one pesticide is usually in the range from 10 to 70% by weight, in particular in the range from 15 to 50% by weight, based on the total weight of the solid composition.

Further embodiments according to the present invention include:
Process for increasing the yield of a plant product comprising the steps of treating seed with the coating composition as defined in claims - preferably a coating composition selected from (Q18) to (Q22), and/or a coating composition selected from (R14) to (R19), and/or a coating composition selected from (S18) to (S21) - , and propagating the seed to obtain the plant product, wherein the plant product is preferably selected from the list of grain, fruit, vegetable, nut, crop, seed, wood, flower, the plant itself and a selected part of this plant.

Process for improving the resistance of seed against abiotic stress, preferably during seed germination, characterized by the steps of treating the seed with the coating composition - preferably a coating composition selected from (Q18) to (Q22), and/or a coating composition selected from (R14) to (R19), and/or a coating composition selected from (S18) to (S21) - and propagating the seed comprising the coating composition in the presence of abiotic stress.

Process for improving the frost and freeze resistance of seed, preferably during seed germination, characterized by the steps of treating the seed with the coating composition - preferably a coating composition selected from (Q18) to (Q22), and/or a coating composition selected from (R14) to (R19), and/or a coating composition selected from (S18) to (S21) - and propagating the seed comprising the coating composition in the presence of low temperature stress and/or in contact with cold water.

Process for improving the resistance of seed against chilling injury, preferably during seed germination, characterized by the steps of treating the seed with the coating composition - preferably a coating composition selected from (Q18) to (Q22), and/or a coating composition selected from (R14) to (R19), and/or a coating composition selected from (S18) to (S21) - and propagating the seed comprising the coating composition in the presence of low temperature stress.

Process for improving the resistance of seed against imbibition of cold water, preferably during seed germination, characterized by the steps of treating the seed with the coating composition - preferably a coating composition selected from (Q18) to (Q22), and/or a coating composition selected from (R14) to (R19), and/or a coating composition selected from (S18) to (S21) - and propagating the seed comprising the coating composition under conditions which lead to the imbibition of cold water.

Process according to one of the preceding processes, wherein the coating composition further comprises waxes, carriers, surfactants, emulsifying agents, coloring agents, anti-foam agents, anti-freeze agents, bactericidal agents, thickeners, dispersants, solvents or combinations thereof.

Process according to one of the preceding processes, wherein the coating composition further comprises a pesticidal component.

Process according to the preceding process wherein the pesticidal component is selected from fungicides, herbicides, insecticides, acaricides, nematicides and combinations thereof.

The present invention is further illustrated, but not limited by the following examples:

### Examples

### Methods

Test method for measuring frost and freeze resistance of coated seed

Freezing soil conditions are extremely stressful to imbibing seeds and only the most vigorous seeds will germinate and emerge. Efficacy of seed coating compositions described in the present invention to improve frost and freeze resistance is quantified by estimates of membrane stability and lipid peroxidation. Seeds that imbibe under low temperatures often have compromised cell membranes that facilitate leakage of cell contents that weakens the seed. Increased electrolyte conductivity of seeds that have imbibed at low or freezing temperatures is correlated with seed and seedling vigor. Electrolyte conductivity of imbibition water is measured directly by using an electric conductivity instrument (Yin et al., 2009). Similarly, malondialdehyde content often is used as an estimate of lipid peroxidation and damage to cell membranes. Malondialdehyde content of seeds exposed to low and freezing temperatures can be determined by using the method of Hendry et al. (1993).

Test method for measuring resistance of coated seed against chilling injury

Seeds often are injured by low temperatures (0-15 °C) at the time of imbibition. Ability of seed coating compositions described in the present invention to limit chilling injury can be quantified by allowing seed to imbibe in water at desired temperatures (0-15 °C) for three days and then transferred to moistened, rolled crepe cellulose paper towels and allowed to germinate at 25 °C for another three days. Germination is recorded as seeds that have radicles that have elongated to at least 1 cm (Tully et al., 1980). In addition to germination, cellular damage and seed viability can be quantified from seed subjected to the same imbibition conditions by using the tetrazolium estimated viability test. The tetrazolium test estimates damaged and dead tissue caused by imbibitional chilling injury (Tully et al, 1980).

Test method for measuring mitigation of imbibition of cold water in seed by seed coatings

Rate of water uptake during seed germination often dictates severity of imbibational chilling injury (Orr et al., 1982). Consequently, the use of the seed coating compositions according to the present invention will increase the resistance of seed, seedling and/or the early plant against chilling injury by reducing the rate of water uptake. Water uptake during imbibition can be measured by placing seeds in water at desired temperature, e.g., 0-15 °C for cold water, removing at various intervals, blotting dry, and weighing. Likewise, seeds at various stages of imbibation can be destructively sampled and stained by using iodine to measure depth of water penetration, since hydrated starch in the seed will stain with iodine, but dry starch will not (Tully et al., 1980).

Hendry, G.A.F., W.E. Finch-Savage, P.C. Thorpe, N.M. Atherton, S.M. Buckland K.A. Nillsson. 1993. Free radical processes and loss of seed viability during desiccation in the recalcitrant species Quercus robur L. New Phytol. 122:273-279.

Orr, W., A.I. De La Rouch, J. Singh, and H. Voldeng. 1983. Imbibitional chilling injury in cultivars of soybeans differing in temperature sensitivity to pod formation and maturation periods. Can. J. Bot. 61:2996-2998.

Tully, R.E, M.E. Musgrave, A.C. Leopold. 1980. The seed coat as a control of imbibitional chilling injury. Crop Sci. 21: 312-317.

Yin, G., H. Sun, X. Xin, G. Qin, Z. Liang, X Jing. 2009. Mitochondrial damage in the soybean seed axis during imbibition at chilling temperatures. Plant Cell Physiol. 50(7):1305-1318.

### Experimental tests A

### Experimental test A1: (see also Table A1)

| **Seed coating A - generic composition** | |
|---|---|
| Pigment | 0 - 25 wt% |
| anti-freeze | 0 - 20 wt% |
| anti-foam | 0 - 1.0 wt% |
| bactericide | 0 - 1.0 wt% |
| latex polymer | 5 - 50 wt% |
| surfactant | 1 - 10 wt% |
| thickener | 0 - 10 wt% |
| wax | 1 - 25 wt% |
| diluent; water | ad 100 wt% |

For the detailed composition of seed coating A, see table D3 below.

The yield of spring wheat treated with the seed coating A was compared to a base seed treatment in which no seed coating was applied.

The values listed in Table A1 are the mean of 12 yield assessments (3 locations with 4 replications per location).

For comparative purposes, the base seed treatment was Dividend Extreme applied at 59.15 ml (2 fl oz) per 45.36 kg (100 lb) of seeds.

Seed coating A was applied at an application rate of 59.15 ml (2 fl oz) per 45.36 kg (100 lb) of seeds.

Increased yield of plant product was observed for the seed coated with seed coating A.

**Table A1: Yield of spring wheat treated with base seed treatment or with base seed treatment + coating A**

| Treatment | Yield (bushels per acre) 1 = 67.25 kg/ha |
|---|---|
| Base seed treatment | 25.4 |
| Base seed treatment + seed coating A | 27.2 |

### Experimental test A2: (see also Table A2)

| **Seed coating A and B - generic composition** | |
|---|---|
| pigment | 0 - 25 wt% |
| anti-freeze | 0 - 20 wt% |
| anti-foam | 0 - 1.0 wt% |
| bactericide | 0 - 1.0 wt% |
| latex polymer | 5 - 50 wt% |
| surfactant | 1 - 10 wt% |
| thickener | 0 - 10 wt% |
| wax | 1 - 25 wt% |
| diluent; water | ad 100 wt% |

For the detailed composition of seed coating B, see table D4 below.

The yield of spring wheat treated with the seed coating seed coating A and seed coating B, respectively was compared to a base seed treatment without coating of the seed.

The values listed in Table A2 are the mean of 24 yield assessments (6 locations with 4 replications per location).

For comparative purposes, the base seed treatment was Dividend Extreme applied at 59.15 ml (2 fl oz) per 45.36 kg (100 lb) of seeds.

Seed coating A was applied at an application rate of 59.15 ml (2 fl oz) per 45.36 kg (100 lb) of seeds, whereas seed coating B was applied at an application rate of 35.49 ml (1.2 fl oz) per 45.36 kg (100 lb) seed.

Increased yield of plant product was observed for the seed coated with seed coating A and seed coating B, respectively.

**Table A2: Yield of spring wheat treated with base seed treatment or with base seed treatment + coating A or B**

| Treatment | Yield (bushels per acre) 1 = 67.25 kg/ha |
|---|---|
| Base seed treatment | 58.8 |
| Base seed treatment + seed coating A | 65.2 |
| Base seed treatment + seed coating B | 66.5 |

### Experimental test A3: (see also Table A3)

| **Seed coating C - generic composition** | |
|---|---|
| auxiliary | 0 - 20 wt% |
| anti-freeze | 0 - 20 wt% |
| anti-foam | 0 - 1.0 wt% |
| bactericide | 0 - 1.0 wt% |
| water soluble polymer carrier | 1 - 50 wt% |
| surfactant | 1 - 10 wt% |
| thickener | 0 - 10 wt% |
| wax | 1 - 25 wt% |
| diluent; water | ad 100 wt% |

For the detailed composition of seed coating C, see table D1 below.

The yield of soybean treated with seed coating seed coating C was compared to a base seed treatment.

The values listed in Table A3 are the mean of 56 yield assessments (14 locations with 4 replications per location).

For comparative purposes, the base seed treatment was Apron Maxx RFC applied at 44.36 ml (1.5 fl oz) per 45.36 kg (100 lb) of seeds.

Seed coating C was applied at an application rate of 44.36 ml (1.5 fl oz) per 45.36 kg (100 lb) of seeds.

**Table A3: Yield of soybean treated with base seed treatment or with base seed treatment + coating C**

| Treatment | Yield (bushels per acre) 1 = 67.25 kg/ ha |
|---|---|
| Base seed treatment | 50.7 |
| Base seed treatment + seed coating C | 52.3 |

### Experimental test A4 (see Table A4):

The saturated cold test mimics stress imposed by cold water seed imbibition and reduced oxygen availability and is routinely used as a vigor test within the seed industry. As evidenced below a seed coating compositions according to the present invention increased germination, indicating enhanced resistance of coated seed to chilling injury.

**Table A4: Average percent of normal germinating seedlings of saturated cold test**

| Saturated Cold Germination | Average % Germination |
|---|---|
| Base Treatment | 74 |
| Base Treatment + Seed Coating A | 84 |

### Experimental test B: Seed treatment with CFD increases plant growth and development of soybean (6 hours)

**Table 1: Detailed composition of seed coating CFD:**

| Name of the ingredient | Function | Weight percentage, based on the total weight of the composition |
|---|---|---|
| Water | diluent | Up to 100% |
| Bactericide | Bactericide | 0.04-0.4 |
| Thickener | Thickener | 0.08-0.8 |
| Maleic anhydride-diisobutylene copolymer | dispersant | 0.5-1.5 |
| ethoxylated castor oil | surfactant | 0.2-1 |
| Antifreeze | antifreeze | 0.5-3.5 |
| dimethylpolysiloxane | Antifoam | 0.04-0.4 |
| polyethylene/carnauba wax blend | Wax | 1-4 |
| pearlescent pigment, mica/TiO2 | pigment | 5-8 |
| Dow Latex DL 233 (styrene butadiene latex polymer) | polymer | 55-65 |

### Objective of experimental tests B

Evaluate plant growth and development of soybean grown from seed treated with the functional polymer coating CFD and imbibed at sub- and supra-optimal temperatures.

### Materials and methods of experimental tests B

CFD, a functional plantability polymer composition, was applied to soybean seeds at a rate of 0.12 mg polymer composition per seed. Seed treatment applications were made at the BASF Seed Solutions Technology Center (SSTC) in Ames, Iowa as a water-based slurry by using methods consistent with commercial seed treatment applications in a laboratory-scale batch treater. Briefly, 1 kg of soybean seeds were added to the drum of a laboratory-scale batch treater and 3.6 mL of prepared slurry (with appropriate amount of CFD and/or water) was applied to the seed as the drum rotated. Seed was rotated in the drum for 30 seconds following application of the slurry to assure uniform and complete coverage to the seed surface.

Treated seeds were allowed to cure for 16-24 hours prior to imbibition treatments. Fifty CFD- or water-treated seeds were immersed in 60 mL of distilled water at temperatures of 1, 25, or 45 °C for six hours. Imbibition was carried out in growth chambers set to desired temperature to maintain appropriate imbibition temperature. Imbibtion treatments were replicated 10 times. Imbibed seeds were sown at a depth of 2.5 cm in thermoformed plastic greenhouse trays (28x54x6 cm, WxLxD) filled with a calcined clay growing media (1630 LVM, Agsorb Products Group, Chicago, Illinois). Trays were placed in greenhouse with environmental controls set to 25 °C with a 16 h photoperiod provided by supplemental lighting with HID lamps. Calcined clay growing media was watered daily during growth period. Fifty imbibed seeds were planted in each tray and treatments were replicated 10 times.

Soybean plants were allowed to grow for 14 days. At the conclusion of the growth period, stand count, as well as shoot and root dry weights were determined. Calcined clay growing media was washed from roots and then shoot and root tissues were separated and dried in a 68 °C oven for three days. Shoot and root dry weights were measured in grams by using an analytical balance. Values reported for shoot and root dry weights are the total biomass harvested from each tray.

### Results

**Table B1: Stand count of soybean seed treated with water or CFD and imbibed at 1 °C for six hours**

| Treatment | Stand count (number) |
|---|---|
| Water | 36.6 |
| Seed coating CFD | 40.1 |

Legend to table B1: Imbibed seeds were sown in calcined clay growing media at a depth of 2.5 cm and grown in a greenhouse for 14 days. Stand count was quantified 13 days after planting and is the number of seedlings that emerged from the 50 seeds planted per flat. Values listed are the mean of 10 independent measurements. Means were separated by using Fisher's protected LSD. Values labeled with different letters are significantly different at *P*≤0.05.

**Table B2. Shoot dry weight of soybean seed treated with water or CFD and imbibed at 1 °C for six hours.**

| Treatment | Shoot dry weight (g) |
|---|---|
| Water | 4.61 |
| Seed coating CFD | 5.28 |

Legend to table B2: Imbibed seeds were sown in calcined clay growing media at a depth of 2.5 cm and grown in a greenhouse for 14 days. Values listed are the mean of 10 independent measurements. Means were separated by using Fisher's protected LSD. Values labeled with different letters are significantly different at *P*≤0.05.

**Table B3: Root dry weight of soybean seed treated with water or CFD and imbibed at 1 °C for six hours.**

| Treatment | Root dry weight (g) |
|---|---|
| Water | 1.26 |
| Seed coating CFD | 1.30 |

Legend to table B3: Imbibed seeds were sown in calcined clay growing media at a depth of 2.5 cm and grown in a greenhouse for 14 days. Values listed are the mean of 10 independent measurements. Means were separated by using Fisher's protected LSD. Values labeled with different letters are significantly different at *P*≤0.05.

**Table B4: Stand count of soybean seed treated with water or CFD and imbibed at 25 °C for six hours.**

| **Treatment** | Stand count (number) |
|---|---|
| **Water** | 37.0 |
| Seed coating CFD | 41.4 |

Legend to table B4: Imbibed seeds were sown in calcined clay growing media at a depth of 2.5 cm and grown in a greenhouse for 14 days. Stand count was quantified 13 days after planting and is the number of seedlings that emerged from the 50 seeds planted per flat. Values listed are the mean of 10 independent measurements. Means were separated by using Fisher's protected LSD. Values labeled with different letters are significantly different at *P*≤0.05.

**Table B5: Shoot dry weight of soybean seed treated with water or CFD and imbibed at 25 °C for six hours.**

| Treatment | Shoot dry weight (g) |
|---|---|
| Water | 4.44 |
| Seed coating CFD | 4.98 |

Legend to table B5: Imbibed seeds were sown in calcined clay growing media at a depth of 2.5 cm and grown in a greenhouse for 14 days. Values listed are the mean of 10 independent measurements. Means were separated by using Fisher's protected LSD. Values labeled with different letters are significantly different at *P*≤0.05.

**Table B6: Root dry weight of soybean seed treated with water or CFD and imbibed at 25 °C for six hours.**

| Treatment | Root dry weight (g) |
|---|---|
| Water | 1.31 |
| Seed coating CFD | 1.45 |

Legend to table B6: Imbibed seeds were sown in calcined clay growing media at a depth of 2.5 cm and grown in a greenhouse for 14 days. Values listed are the mean of 10 independent measurements. Means were separated by using Fisher's protected LSD. Values labeled with different letters are significantly different at *P*≤0.05.

**Table B7: Stand count of soybean seed treated with water or CFD and imbibed at 45 °C for six hours.**

| Treatment | Stand count (number) |
|---|---|
| Water | 35.9 |
| Seed coating CFD | 40.4 |

Legend to table B7: Imbibed seeds were sown in calcined clay growing media at a depth of 2.5 cm and grown in a greenhouse for 14 days. Stand count was quantified 13 days after planting and is the number of seedlings that emerged from the 50 seeds planted per flat. Values listed are the mean of 10 independent measurements. Means were separated by using Fisher's protected LSD. Values labeled with different letters are significantly different at *P*≤0.05.

**Table B8: Shoot dry weight of soybean seed treated with water or CFD and imbibed at 45 °C for six hours.**

| Treatment | Shoot dry weight (g) |
|---|---|
| Water | 4.20 |
| Seed coating CFD | 4.78 |

Legend to table B8: Imbibed seeds were sown in calcined clay growing media at a depth of 2.5 cm and grown in a greenhouse for 14 days. Values listed are the mean of 10 independent measurements. Means were separated by using Fisher's protected LSD. Values labeled with different letters are significantly different at *P*≤0.05.

**Table B9: Root dry weight of soybean seed treated with water or CFD and imbibed at 45 °C for six hours.**

| Treatment | Root dry weight |
|---|---|
| Water | 1.24 |
| Seed coating CFD | 1.40 |

Legend to table B9: Imbibed seeds were sown in calcined clay growing media at a depth of 2.5 cm and grown in a greenhouse for 14 days. Values listed are the mean of 10 independent measurements. Means were separated by using Fisher's protected LSD. Values labeled with different letters are significantly different at *P*≤0.05.

### Experimental tests C: Seed treatment with CFD increases plant growth and development of soybean (16 hours)

The composition of seed coating CFD see above Table 1.

### Objective of experimental tests C

Evaluate plant growth and development of soybean grown from seed treated with the functional polymer coating CFD and imbibed at sub-optimal temperature.

### Materials and methods of experimental tests C

CFD, a functional plantability polymer composition, was applied to soybean seeds at a rate of 0.12 mg polymer composition per seed. Seed treatment applications were made at the BASF Seed Solutions Technology Center (SSTC) in Ames, Iowa as a water-based slurry by using methods consistent with commercial seed treatment applications in a laboratory-scale batch treater. Briefly, 1 kg of soybean seeds were added to the drum of a laboratory-scale batch treater and 3.6 mL of prepared slurry (with appropriate amount of CFD and/or water) was applied to the seed as the drum rotated. Seed was rotated in the drum for 30 seconds following application of the slurry to assure uniform and complete coverage to the seed surface.

Treated seeds were allowed to cure for 16-24 hours prior to imbibition treatments. Fifty CFD- or water-treated seeds were immersed in 60 mL of distilled water at 1 °C for 16 hours. Imbibition was carried out in growth chambers set to desired temperature to maintain appropriate imbibition temperature. Imbibtion treatments were replicated eight times.

Imbibed seeds were sown at a depth of 2.5 cm in thermoformed plastic greenhouse trays (28x54x6 cm, WxLxD) filled with a calcined clay growing media (1630 LVM, Agsorb Products Group, Chicago, Illinois). Trays were placed in greenhouse with environmental controls set to 25 °C with a 16 h photoperiod provided by supplemental lighting with HID lamps. Calcined clay growing media was watered daily during growth period. Fifty imbibed seeds were planted in each tray and treatments were replicated eight times.

Soybean plants were allowed to grow for 14 days. At the conclusion of the growth period, stand count, as well as shoot and root dry weights were determined. Calcined clay growing media was washed from roots and then shoot and root tissues were separated and dried in a 68 °C oven for three days. Shoot and root dry weights were measured in grams by using an analytical balance. Values reported for shoot and root dry weights are the total biomass harvested from each tray.

### Results

**Table C1: Stand count of soybean seed treated with water or CFD and imbibed at 1 °C for 16 hours.**

| Treatment | Stand count (number) 13 days after planting |
|---|---|
| Water | 22.0 |
| Seed coating CFD | 34.9 |

Legend to table C1: Imbibed seeds were sown in calcined clay growing media at a depth of 2.5 cm and grown in a greenhouse for 14 days. Stand count was quantified 13 days after planting and is the number of seedlings that emerged from the 50 seeds planted per flat. Values listed are the mean of eight independent measurements. Means were separated by using Fisher's protected LSD. Values labeled with different letters are significantly different at *P*≤0.05.

**Table C2: Shoot dry weight of soybean seed treated with water or CFD and imbibed at 1 °C for 16 hours.**

| Treatment | Shoot dry weight (g) |
|---|---|
| Water | 2.48 |
| Seed coating CFD | 4.06 |

Legend to table C2: Imbibed seeds were sown in calcined clay growing media at a depth of 2.5 cm and grown in a greenhouse for 14 days. Values listed are the mean of eight independent measurements. Means were separated by using Fisher's protected LSD. Values labeled with different letters are significantly different at *P*≤0.05.

**Table C3: Root dry weight of soybean seed treated with water or CFD and imbibed at 1 °C for 16 hours.**

| Treatment | Root dry weight (g) |
|---|---|
| Water | 0.58 |
| Seed coating CFD | 0.99 |

Legend to table C3: Imbibed seeds were sown in calcined clay growing media at a depth of 2.5 cm and grown in a greenhouse for 14 days. Values listed are the mean of eight independent measurements. Means were separated by using Fisher's protected LSD. Values labeled with different letters are significantly different at *P*≤0.05.

### Experimental tests D

Objective: get more insight in observed stand and yield benefits with the coating compositions of the invention

Includes:
Water imbibition studies at Ames, Iowa

Field studies with select candidates of the coating compositions of the invention and of comparative coating compositions

Early planting to facilitate cold conditions
Corn: No cold conditions encountered
Soybean: Cold and wet in certain locations
Wheat: No cold conditions encountered, but subset inoculated with Pythium ultimum

**Table D1: Detailed composition of seed coating C:**

| Name of the ingredient | Function | Weight percentage, based on the total weight of the composition |
|---|---|---|
| Water | diluent | Up to 100% |
| Bactericide | Bactericide | 0.04-0.4 |
| Thickener | Thickener | 0.08-0.8 |
| Maleic anhydride-diisobutylene copolymer | dispersant | 0.5-2 |
| ethoxylated castor oil | surfactant | 0.2-2.5 |
| Antifreeze | antifreeze | 0.5-3.5 |
| dimethylpolysiloxane | Antifoam | 0.04-0.4 |
| polyethylene/carnauba wax blend | Wax | 5-10 |
| Talc | Auxiliary | 7-13 |
| Polyvinylpyrrolidone / vinyl acetate polymer | polymer | 20-30 |

**Table D2: Detailed composition of seed coating D:**

| Name of the ingredient | Function | Weight percentage, based on the total weight of the composition |
|---|---|---|
| Water | diluent | Up to 100% |
| Bactericide | Bactericide | 0.04-0.4 |
| Thickener | Thickener | 0.08-0.8 |
| Maleic anhydride-diisobutylene copolymer | dispersant | 0.5-2 |
| ethoxylated castor oil | surfactant | 0.2-1 |
| Antifreeze | antifreeze | 0.5-3.5 |
| dimethylpolysiloxane | Antifoam | 7-13 |
| polyethylene/carnauba wax blend | Wax | 1-5 |
| pearlescent pigment, mica/TiO2 | pigment | 20-30 |
| Polyvinylpyrrolidone / vinyl acetate polymer | polymer | 1-6 |

**Table D3: Detailed composition of seed coating A**

| Name of the ingredient | Function | Weight percentage, based on the total weight of the composition |
|---|---|---|
| Water | diluent | Up to 100% |
| Bactericide | Bactericide | 0.04-0.4 |
| Thickener | Thickener | 0.08-0.8 |
| Maleic anhydride-diisobutylene copolymer | dispersant | 1-3 |
| ethoxylated castor oil | surfactant | 0.5-2 |
| Antifreeze | antifreeze | 0.5-3.5 |
| dimethylpolysiloxane | Antifoam | 0.04-0.4 |
| polyethylene/carnauba wax blend | Wax | 4-8 |
| pearlescent pigment 1025 | pigment | 10-15 |
| Dow Latex DL 233 (styrene butadiene latex polymer) | polymer | 25-35 |
| methanol | solvent | 2.5-5 |

**Table D4: Detailed composition of seed coating B**

| Name of the ingredient | Function | Weight percentage, based on the total weight of the composition |
|---|---|---|
| Water | diluent | Up to 100% |
| Bactericide | Bactericide | 0.04-0.4 |
| Thickener | Thickener | 0.08-0.8 |
| Maleic anhydride-diisobutylene copolymer | dispersant | 1-3 |
| ethoxylated castor oil | surfactant | 0.5-2 |
| Antifreeze | antifreeze | 0.5-3.5 |
| dimethylpolysiloxane | Antifoam | 0.04-0.4 |
| polyethylene/carnauba wax blend | Wax | 4-8 |
| pearlescent pigment, mica/TiO2 | pigment | 10-15 |
| Dow Latex DL 233 (styrene butadiene latex polymer) | polymer | 45-55 |

Below results are results of field trials conducted by collaborators, most trials were randomized complete block design, 4 reps per treatment.

### Use of the coating compositions of the invention on soybean:

Trial results from S-D20-A-
Trials conducted in US federal states North Dakota, Minnesota, Iowa - early planting

Trial conditions: 2 locations too wet to plant early, then warming up very quickly. No major pressure on seed and seedling.

**Table D5: Stand count 14-22 days after planting from trial results from S-D20-A- (3 trial average) (Check = 100%)**

| Treatment | Check | Seed coating C | Seed coating D |
|---|---|---|---|
| Stand count (number) 14-22 days after planting | 100 | 106 | 105 |

### Use of the coating compositions of the invention on wheat

Trial results from S-E40-A-
Trials conducted in North Dakota (2), Idaho - no inoculation
Trials conducted in Wisconsin (2) - inoculated with Pythium ultimum

**Table D6: Stand count 15 days after planting from trial results from S-E40-A- (2 trial average) with seed inoculated with Pythium ultimum (Check = 100 %)**

| Treatment | Check | Base | Seed coating A | Seed coating A + Base | Seed coating B | Seed coating B + Base |
|---|---|---|---|---|---|---|
| Stand count (number) 15 DAP | 100 | 173 | 148 | 208 | 167 | 224 |

Legend to table D5 and D6: "Base" or "base treatment" means seed treatment with Stamina F3 (a composition comprising metalaxyl, pyraclostrobin, and triticonazole); "Check" means "no seed treatment".

The results listed in Table D6 show that there is a significant stand increase with the coating compositions of the invention compared to check and base treatment only.

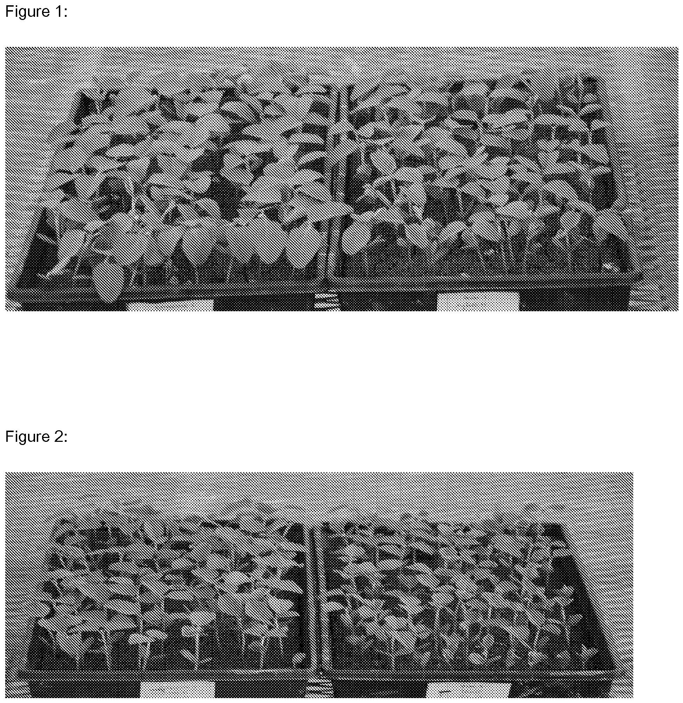

Figure 1 shows the representative soybean seedlings grown from seed treated with CFD and imbibed at 1 °C for six hours; From left to right: CFD (0.12 mg per seed) and water-treated control.
Figure 2 shows the representative soybean seedlings grown from seed treated with CFD and imbibed at 45 °C for six hours; From left to right: CFD (0.12 mg per seed) and water-treated control

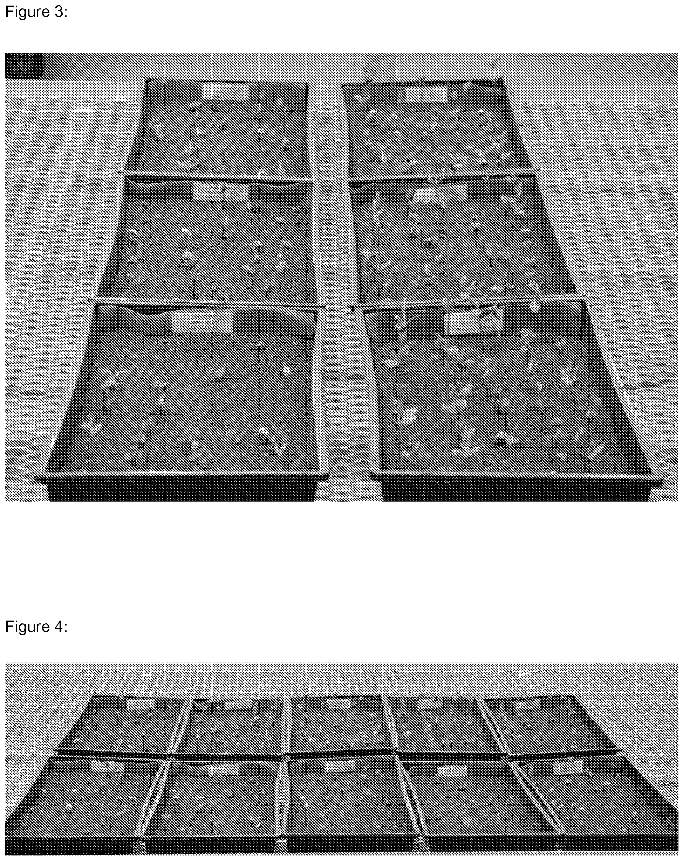

Figure 3 shows the representative soybean seedlings grown from seed treated with CFD and imbibed at 1 °C for 16 hours; From left to right: water-treated control and CFD (0.12 mg per seed).
Figure 4 shows the representative soybean seedlings grown from seed treated with CFD (top row) or water (bottom row) and imbibed at 1 °C for 16 hours.

## Claims

1. A seed coating composition comprising
(a) styrene butadiene latex polymer in an amount of from **25** to 75 % by weight based on the total weight of the composition, and
(b) polyethylene/carnauba wax blend in an amount of from 0.1 to 15 % by weight based on the total weight of the composition, and
(c) ethoxylated castor oil in an amount of from 0.1 to 2.5 % by weight based on the total weight of the composition, and
(d) maleic anhydride-diisobutylene copolymer in an amount of from 0.3 to 3 % by weight based on the total weight of the composition and water ad 100 % by weight based on the total weight of the composition.

2. Seed coating composition according to claim 1, wherein the styrene butadiene latex polymer is in an amount of from 55 to 70 % by weight based on the total weight of the composition.

3. Seed coating composition according to claim 1 or 2, further comprising mica platelets coated with titanium dioxide and/or iron oxide in an amount of from 2.5 to 30 by weight based on the total weight of the composition.

4. Seed coating composition according to claim 1, comprising
(a) styrene butadiene latex polymer in an amount of from **55 to 70** % by weight based on the total weight of the composition, and
(b) polyethylene/carnauba wax blend in an amount of from 0.8 to 8 % by weight based on the total weight of the composition, and
(c) ethoxylated castor oil in an amount of from 0.1 to 2.5 % by weight based on the total weight of the composition, and
(d) maleic anhydride-diisobutylene copolymer in an amount of from 0.3 to 3 % by weight based on the total weight of the composition, and
(e) an antifreeze agent selected from the group consisting of ethylene glycol, propylene glycol, urea and glycerin (propane-1,2,3-triol) in an amount of from 0.1 to 15 % by weight based on the total weight of the composition, and
(f) water ad 100 % by weight based on the total weight of the composition.

5. A seed coating composition according to claim 4, further comprising at least one of
(g) an anti-foaming agent in an amount of not more than 5 % by weight based on the total weight of the composition,
(h) a thickener in an amount of not more than 10 % by weight based on the total weight of the composition,
(i) a bactericide in an amount of not more than 5 % by weight based on the total weight of the composition, and
(j) a pigment in an amount of not more than 30 % by weight based on the total weight of the composition.

6. A seed coating composition according to claim 4, further comprising
(g) an anti-foaming agent in an amount of not more than 5 % by weight based on the total weight of the composition, and
(h) a thickener in an amount of not more than 10 % by weight based on the total weight of the composition, and
(i) a bactericide in an amount of not more than 5 % by weight based on the total weight of the composition, and
(j) a pigment in an amount of not more than 30 % by weight based on the total weight of the composition.

7. Use of a coating composition for increasing the yield of a plant product which is derived from seed treated with the coating composition **characterized by** the steps of treating the seed with the coating composition and propagating the seed to obtain the plant product, wherein the coating composition is a seed coating composition as claimed in anyone of the claims 1 to 6.

8. Use of a coating composition for improving the resistance of seed against abiotic stress, **characterized by** the steps of treating the seed with the coating composition and propagating the seed comprising the coating composition in the presence of abiotic stress, wherein the coating composition is a seed coating composition as claimed in anyone of the claims 1 to 6.

9. Use of a coating composition according to claim 8, wherein the abiotic stress is low temperature stress and/or contact with cold water and the frost and freeze resistance of the seed is improved.

10. Use of a coating composition according to claim 8, wherein the abiotic stress is chilling injury.

11. Use of a coating composition according to claim 8, wherein the abiotic stress is caused by imbibition of cold water.

12. Use of a coating composition according to claim 8, 9, 10 or 11, wherein the resistance to abiotic stress during seed germination is improved.

13. Use of the coating composition according to one of the claims 7 to 12, wherein the coating composition further comprises a pesticidal component selected from fungicides, herbicides, insecticides, acaricides, nematicides and combinations thereof.

## Patentansprüche

1. Saatgutbeschichtungszusammensetzung, umfassend
(a) Styrol-Butadien-Latex-Polymer in einer Menge von 25 bis 75 Gew.-%, bezogen auf das Gesamtgewicht der Zusammensetzung, und
(b) Polyethylen-Karnaubawachs-Mischung in einer Menge von 0,1 bis 15 Gew.-%, bezogen auf das Gesamtgewicht der Zusammensetzung, und
(c) ethoxyliertes Rizinusöl in einer Menge von 0,1 bis 2,5 Gew.-%, bezogen auf das Gesamtgewicht der Zusammensetzung, und
(d) Maleinsäureanhydrid-Diisobutylen-Copolymer in einer Menge von 0,3 bis 3 Gew.-%, bezogen auf das Gesamtgewicht der Zusammensetzung, und Wasser ad 100 Gew.-%, bezogen auf das Gesamtgewicht der Zusammensetzung.

2. Saatgutbeschichtungszusammensetzung nach Anspruch 1, wobei das Styrol-Butadien-Latex-Polymer in einer Menge von 55 bis 70 Gew.-%, bezogen auf das Gesamtgewicht der Zusammensetzung, vorliegt.

3. Saatgutbeschichtungszusammensetzung nach Anspruch 1 oder 2, weiterhin umfassend titandioxidund/oder eisenoxidbeschichtete Glimmerplättchen in einer Menge von 2,5 bis 30 Gew.-%, bezogen auf das Gesamtgewicht der Zusammensetzung.

4. Saatgutbeschichtungszusammensetzung nach Anspruch 1, umfassend
(a) Styrol-Butadien-Latex-Polymer in einer Menge von **55 bis 70** Gew.-%, bezogen auf das Gesamtgewicht der Zusammensetzung, und
(b) Polyethylen-Karnaubawachs-Mischung in einer Menge von 0,8 bis 8 Gew.-%, bezogen auf das Gesamtgewicht der Zusammensetzung, und
(c) ethoxyliertes Rizinusöl in einer Menge von 0,1 bis 2,5 Gew.-%, bezogen auf das Gesamtgewicht der Zusammensetzung, und
(d) Maleinsäureanhydrid-Diisobutylen-Copolymer in einer Menge von 0,3 bis 3 Gew.-%, bezogen auf das Gesamtgewicht der Zusammensetzung, und
(e) ein Frostschutzmittel ausgewählt aus der aus Ethylenglykol, Propylenglykol, Harnstoff und Glycerin (Propan-1,2,3-triol) bestehenden Gruppe in einer Menge von 0,1 bis 15 Gew.-%, bezogen auf das Gesamtgewicht der Zusammensetzung, und
(f) Wasser ad 100 Gew.-%, bezogen auf das Gesamtgewicht der Zusammensetzung.

5. Saatgutbeschichtungszusammensetzung nach Anspruch 4, weiterhin umfassend mindestens eine der folgenden Komponenten:
(g) ein Antischaummittel in einer Menge von nicht mehr als 5 Gew.-%, bezogen auf das Gesamtgewicht der Zusammensetzung,
(h) ein Verdickungsmittel in einer Menge von nicht mehr als 10 Gew.-%, bezogen auf das Gesamtgewicht der Zusammensetzung,
(i) ein Bakterizid in einer Menge von nicht mehr als 5 Gew.-%, bezogen auf das Gesamtgewicht der Zusammensetzung, und
(j) ein Pigment in einer Menge von nicht mehr als 30 Gew.-%, bezogen auf das Gesamtgewicht der Zusammensetzung.

6. Saatgutbeschichtungszusammensetzung nach Anspruch 4, weiterhin umfassend
(g) ein Antischaummittel in einer Menge von nicht mehr als 5 Gew.-%, bezogen auf das Gesamtgewicht der Zusammensetzung, und
(h) ein Verdickungsmittel in einer Menge von nicht mehr als 10 Gew.-%, bezogen auf das Gesamtgewicht der Zusammensetzung, und
(i) ein Bakterizid in einer Menge von nicht mehr als 5 Gew.-%, bezogen auf das Gesamtgewicht der Zusammensetzung, und
(j) ein Pigment in einer Menge von nicht mehr als 30 Gew.-%, bezogen auf das Gesamtgewicht der Zusammensetzung.

7. Verwendung einer Beschichtungszusammensetzung zum Erhöhen des Ertrags eines Pflanzenprodukts, welches aus mit der Beschichtungszusammensetzung behandeltem Saatgut gewonnen wird, **gekennzeichnet durch** die folgenden Schritte: Behandeln des Saatguts mit der Beschichtungszusammensetzung und Fortpflanzen des Saatguts unter Erhalt des Pflanzenprodukts, wobei es sich bei der Beschichtungszusammensetzung um eine Saatgutbeschichtungszusammensetzung nach einem der Ansprüche 1 bis 6 handelt.

8. Verwendung einer Beschichtungszusammensetzung zur Verbesserung der Resistenz von Saatgut gegen abiotischen Stress, **gekennzeichnet durch** die folgenden Schritte: Behandeln des Saatguts mit der Beschichtungszusammensetzung und Fortpflanzen des die Beschichtungszusammensetzung umfassenden Saatguts in Gegenwart von abiotischem Stress, wobei es sich bei der Beschichtungszusammensetzung um eine Saatgutbeschichtungszusammensetzung nach einem der Ansprüche 1 bis 6 handelt.

9. Verwendung einer Beschichtungszusammensetzung nach Anspruch 8, wobei es sich bei dem abiotischen Stress um Niedrigtemperaturstress und/oder Kontakt mit kaltem Wasser handelt und die Frost- und Gefrierresistenz des Saatguts verbessert wird.

10. Verwendung einer Beschichtungszusammensetzung nach Anspruch 8, wobei es sich bei dem abiotischen Stress um eine Kühlverletzung handelt.

11. Verwendung einer Beschichtungszusammensetzung nach Anspruch 8, wobei der abiotische Stress durch Aufnahme von kaltem Wasser verursacht wird.

12. Verwendung einer Beschichtungszusammensetzung nach Anspruch 8, 9, 10 oder 11, wobei die Resistenz gegen abiotischen Stress während der Saatgutkeimung verbessert wird.

13. Verwendung der Beschichtungszusammensetzung nach einem der Ansprüche 7 bis 12, wobei die Beschichtungszusammensetzung weiterhin eine aus Fungiziden, Herbiziden, Insektiziden, Akariziden, Nematiziden und Kombinationen davon ausgewählte pestizide Komponente umfasst.

## Revendications

1. Composition d'enrobage de semences, comprenant
(a) un polymère de latex styrène-butadiène selon une quantité allant de 25 à 75% en poids, sur la base du poids total de la composition, et
(b) un mélange de polyéthylène/cire de carnauba selon une quantité allant de 0,1 à 15% en poids, sur la base du poids total de la composition, et
(c) de l'huile de ricin éthoxylée selon une quantité allant de 0,1 à 2,5% en poids, sur la base du poids total de la composition, et
(d) un copolymère d'anhydride maléique-diisobutylène selon une quantité allant de 0,3 à 3% en poids, sur la base du poids total de la composition, et
de l'eau qsp 100% en poids, sur la base du poids total de la composition.

2. Composition d'enrobage de semences selon la revendication 1, dans laquelle le polymère de latex styrène-butadiène est présent selon une quantité allant de 55 à 70% en poids, sur la base du poids total de la composition.

3. Composition d'enrobage de semences selon la revendication 1 ou 2, comprenant en outre des plaquettes de mica revêtues de dioxyde de titane et/ou d'oxyde de fer selon une quantité allant de 2,5 à 30% en poids, sur la base du poids total de la composition.

4. Composition d'enrobage de semences selon la revendication 1, comprenant
(a) un polymère de latex styrène-butadiène selon une quantité allant de 55 à 70% en poids, sur la base du poids total de la composition, et
(b) un mélange de polyéthylène/cire de carnauba selon une quantité allant de 0,8 à 8% en poids, sur la base du poids total de la composition, et
(c) de l'huile de ricin éthoxylée selon une quantité allant de 0,1 à 2,5% en poids, sur la base du poids total de la composition, et
(d) un copolymère d'anhydride maléique-diisobutylène selon une quantité allant de 0,3 à 3% en poids, sur la base du poids total de la composition, et
(e) un agent antigel choisi dans le groupe constitué par l'éthylène glycol, le propylène glycol, l'urée et le glycérol (propane-1,2,3-triol) selon une quantité allant de 0,1 à 15% en poids, sur la base du poids total de la composition, et
(f) de l'eau qsp 100% en poids, sur la base du poids total de la composition.

5. Composition d'enrobage de semences selon la revendication 4, comprenant en outre au moins un parmi
(g) un agent antimousse selon une quantité non supérieure à 5% en poids, sur la base du poids total de la composition,
(h) un épaississant selon une quantité non supérieure à 10% en poids, sur la base du poids total de la composition,
(i) un bactéricide selon une quantité non supérieure à 5% en poids, sur la base du poids total de la composition, et
(j) un pigment selon une quantité non supérieure à 30% en poids, sur la base du poids total de la composition.

6. Composition d'enrobage de semences selon la revendication 4, comprenant en outre
(g) un agent antimousse selon une quantité non supérieure à 5% en poids, sur la base du poids total de la composition, et
(h) un épaississant selon une quantité non supérieure à 10% en poids, sur la base du poids total de la composition, et
(i) un bactéricide selon une quantité non supérieure à 5% en poids, sur la base du poids total de la composition, et
(j) un pigment selon une quantité non supérieure à 30% en poids, sur la base du poids total de la composition.

7. Utilisation d'une composition d'enrobage afin d'augmenter le rendement d'un produit végétal qui est dérivé de semences traitées par la composition d'enrobage, **caractérisée par** les étapes consistant à traiter les semences par la composition d'enrobage et propager les semences afin d'obtenir le produit végétal, où la composition d'enrobage est une composition d'enrobage de semences selon l'une quelconque des revendications 1 à 6.

8. Utilisation d'une composition d'enrobage afin d'améliorer la résistance de semences vis-à-vis d'un stress abiotique, **caractérisée par** les étapes consistant à traiter les semences par la composition d'enrobage et propager les semences comprenant la composition d'enrobage en présence d'un stress abiotique, où la composition d'enrobage est une composition d'enrobage de semences selon l'une quelconque des revendications 1 à 6.

9. Utilisation d'une composition d'enrobage selon la revendication 8, dans laquelle le stress abiotique est un stress de faible température, et/ou un contact avec de l'eau froide et la résistance des semences vis-à-vis de la gelée et du gel est améliorée.

10. Utilisation d'une composition d'enrobage selon la revendication 8, dans laquelle le stress abiotique est constitué des lésions causées par la réfrigération.

11. Utilisation d'une composition d'enrobage selon la revendication 8, dans laquelle le stress abiotique est provoqué par une imbibition par de l'eau froide.

12. Utilisation d'une composition d'enrobage selon la revendication 8, 9, 10 ou 11, dans laquelle la résistance vis-à-vis d'un stress abiotique, lors de la germination des semences, est améliorée.

13. Utilisation de la composition d'enrobage selon l'une des revendications 7 à 12, où la composition d'enrobage comprend en outre un composant pesticide choisi parmi les fongicides, les herbicides, les insecticides, les acaricides, les nématicides, et des combinaisons de ceux-ci.
